# EUROPEAN PATENT APPLICATION

(11) **EP 1 113 377 A2**
(43) Date of publication of application: **04.07.2001**
(21) Application number: 00128277.1
(22) Date of filing: 22.12.2000
(51) Int. Cl.: G06F 17/60

(54) **Electronic commerce system and its method**

(30) Priority: 28.12.1999 JP 37430199; 07.12.2000 JP 2000372398
(71) Applicant: Net Protections, Inc., Tokyo (JP)
(72) Inventor: Partos, Jerome, c/o Net Protections, Inc., Tokyo (JP); Enomoto, Akira, c/o Net Protections, Inc., Tokyo (JP)
(74) Representative: Sperling, Rüdiger, Dipl.-Ing.

(57) **Abstract**

To provide an electronic commerce of system and a method of electronic transaction wherein personal data of each customer is protected from being collected or stored by a party otherparty than the customer himself, andalso capable of reliably a complaint or an inquiry from a customer can reliably be responded.

Means of Attaining the Object

A sales information coordinating organization is positioned between customers' terminals and sellers' terminals. The sales information coordinating organization collectively manages the personal information of all the customers. The sales information coordinating organization separately arranges the two types of information, i.e. the personal information including the names and the address of the customers, and the order information into data, and stores these different types of data in separate databases. After a transaction is completed, the sales information coordinating organization removes the personal data of the customer. The sales information coordinating organization transmits to a seller or a service organization an ID number and a transaction code attached to each customer instead of the personal information, such as the name, the address, etc. In the event of a complaint or an inquiry from a customer, too, the sales information coordinating organization comes between the customer and the seller or the service organization and conveys the customer's request to the seller or the service organization.

## Description

### DETAILED DESCRIPTION OF THE INVENTION

### Field of the Invention

The present invention relates to an electronic commerce system that permits a customer to place an order or request various services, such as respond to a complaint or inquiry, to a seller through a sales information coordinating organization without directly contacting the seller. The invention also relates to a method of electronic transaction using such a system.

The term "electronic commerce" mentioned in this specification means a commercial transaction conducted through an electronic network by using an information processing device, such as a personal computer, a server, a cellular phone, and examples of the "network" mentioned above include both on-line networks and off-line networks.

### Prior Art

Conventional electronic commerce is typically conducted in such a manner that a seller provides information on items to be sold (hereinafter called transaction items) over a network and that a customer who has accessed the information deals directly with the seller on the network.

As the customer has to disclose his or her name, address or other personal information to the seller for transaction, the customer is not able to receive the benefit of anonymity, which he could enjoy in other occasions when using a network. In case account is settled on the network, not only the aforementioned personal information but also financial information, such as the credit card number, has to be disclosed to the seller in order to execute transaction. It is therefore natural for a customer to be reluctant to carry out transactions on a network, where reliability of a seller cannot be easily ascertained. Although there are some cases where account is settled outside a network, this requires a complicated procedure, which reduces or cancels out the merit of network transaction. For sellers, too, it is difficult to ascertain reliability of a customer so that they have heretofore been reluctant to participate in electronic commerce using a network, in spite of its various merits, such as expected increase in customers and cost reduction.

As a result of the recent spread of personal computers, not only corporations and other organizations but also the number of individuals who participate in electronic commerce is on the increase. Furthermore, with the advances and spread of cellular phones, electronic commerce using a cellular phone, too, is becoming a reality. Under the present situation where various data processing devices are making advances and proliferating, a transaction that involves a third party and an account settlement organization between a customer and a seller, is also practiced.

In a transaction that involves a third party, however, the function of the third party is often for merely storing information concerning customers and sellers and providing each customer or seller with such information, or simply conveying a request of a customer to a seller or a seller's sales conditions to a customer; normally, a third party discloses a customer's personal data to a seller, and, thereafter, would not come between the customer and the seller.

### Problems To Be Solved by The Invention

In other words, in electronic commerce where third parties take part as described above, too, many and unspecified parties including the third parties and the sellers, or sellers that have successfully completed transactions can easily obtain personal information on individuals, such as a customers' names, addresses, telephone numbers, credit card numbers, etc. or put such information in a database. Doing so is regarded as one of the benefits of being a third party or a seller. On the other hand, people who do not want their personal information known to others or put into a database, or those who feel uncomfortable about their personal information being handled in such a way tend to refrain from taking part in electronic commerce, resulting in certain limitations in spread of the market of electronic commerce.

Various problems have arisen in electronic commerce: an item that does not agree with the one ordered has been delivered; no item is delivered although payment has been made; there is nowhere to file a complaint; and contact is unsuccessful when a customer tries to make a complaint. The fact that there is no means to enable a customer to ascertain reliability of a seller or ensure the safety of transaction is one of the reasons for potential customers to be reluctant to participate in electronic commerce. Furthermore, even if a complaint is delivered to the seller, the customer still has to deal directly with the seller, and getting satisfactory response from the seller is not easy and requires a troublesome procedure. That is another major reason to make potential customers reluctant to participate in electronic commerce.

As described above, although electronic commerce has a tremendous potential market owing to the recent spread of information processing apparatuses, such as personal computers and cellular phones, it is difficult to expect dramatic growth in electronic commerce due to problems concerning its system, reliability and safety, resulting in the present situation where both potential customers and sellers are unable to enjoy various benefits that electronic commerce can provide: for customers, ability of buying various items easily without going out, and, for sellers, increase in the number of new customers and reduction of costs.

For the reasons stated above, there is a demand for a system and method for electronic commerce which offers benefits such that, when a customer buys goods or receives other services, many and unspecified sellers or even the seller from which the customer makes the purchase are prevented from obtaining or retaining the customer's personal information; the customer's personal information is also protected from being retained by the third party that acts as an intermediary in the transaction; the seller is allowed to carry out sales with a sense of security; a complaint or claim, can easily and reliably be conveyed from the customer to the seller; and that the customer is ensured to receive the seller's response.

### Means to Solve The Problems

In order to solve the above problems, the present invention provides an electronic commerce system which includes customers' terminals and a sales information coordinating organization connected to the system through a network, wherein each customer's terminal is provided with a means to request provided information to specify a seller or sellers, items and their prices to be provided by the seller(s), a means to receive said provided information transmitted from the sales information coordinating organization, a means to display said provided information transmitted from the sales information coordinating organization, a means to input customer information and order information that serves to specify a transaction item or transaction items, and a means to transmit said customer information and order information to the sales information coordinating organization; and the sales information coordinating organization is provided with a means to transmit provided information to a customer's terminal at a request from the customer's terminal, a means to receive customer information and order information from a customer's terminal, a means to store customer information from a customer's terminal, a means to store said order information from a customer's terminal, a means to store said provided information, and a means to remove customer information.

### Preferred Embodiment of The Invention

Next, the present invention is explained hereunder, referring to the attached drawings.

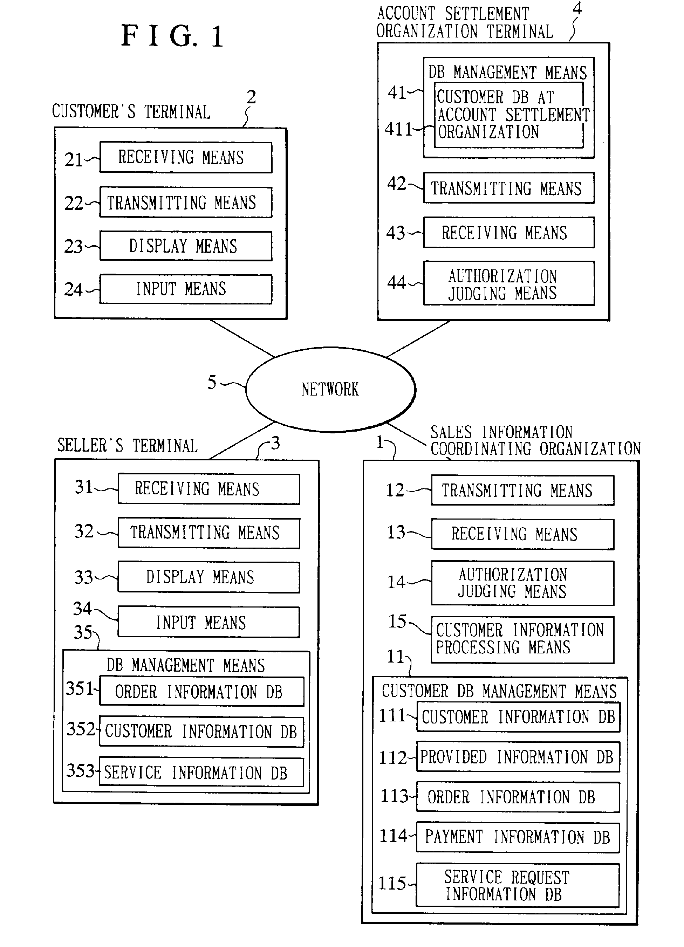

Fig. 1 is a schematic diagram showing an electronic commerce system according to an embodiment of the invention. The electronic commerce system is comprised of a sales information coordinating organization 1, customers' terminals 2, sellers' terminals 3 and account settlement organizations' terminals 4, all of which are connected through a network. Although there are various communication information transmission means that can serve as the network 5, the present explanation is given of an example where the network 5 is an internet.

The sales information coordinating organization 1 is positioned between customers and sellers, and its principal function is to convey an order or a request for service from a customer to a seller or convey a seller's response to a request for service or other information to a customer. The sales information coordinating organization 1 is composed of information processing apparatuses, such as computers or servers, and includes a database management means 11, a transmitting means 12, a receiving means 13, an authorization judging means 14 and a customer information processing means 15. In addition to these means, a agreement judging means 16 may also be included.

The database management means 11 is a means to select information received or created by the sales information coordinating organization 1, create a database for each respective type of information, and manage the information in the databases, including extracting or removing desired information from the database. To be more specific, the database management means 11 serves to manage a customer information database 111 that stores personal information on customers, such as their names, sexes, addresses, telephone numbers, e-mail addresses, bank account numbers, credit card numbers, ID numbers, transaction codes, etc; a provided information database 112 that stores information on sellers, such as their names, addresses, telephone numbers, names and prices of transaction items, e-mail addresses, information on personnel in charge, etc.; an order information database 113 that stores information on orders, each of which comprises information on transaction items specified by a customer and sent from the customer's terminal 2, the quantity and price of the specified items, the total price for the transaction and the order code representing the transaction; a payment information database 114 that stores information concerning payments by customers or authorization information sent from the account settlement organization terminals 4, each authorization information item clarifying whether a customer is allowed to use the account settlement organization; and a service request information database 115 that stores request for services sent from customers' terminal 2.

ID number, which is mentioned in the foregoing paragraph, is both numerals, alphabets and/or other characters and serves to discern each customer. According to the present embodiment, an ID number is provided by the sales information coordinating organization 1 each time an order is placed from a customer's terminal 2. However, it is also permissible to provide an ID number when an order is placed from a customer's terminal 2 for the first time, and the same ID number may be used thereafter for that particular customer's terminal 2. A "transaction code" is a code for specifying a facility which is situated in a location specified by a customer and serves to store transaction items ordered by the customer. An "order code" means a code attached to each respective order from a customer so as to identify said order. Each and every order is required to have its own order code. Examples of "requests for services" include complaints from customers about items ordered, inquiries concerning delivery schedules, etc.

The transmitting means 12 is a means to transmit information, such as confirmation of orders or requests for payment to a customer' terminal 2, order information to instructiona seller' terminal 3, or transmit information instructing settlement of account, a customer's request for authorization of use of the account settlement organization or other information to an account settlement organization terminals 4.

The receiving means 13 is a means to receive orders or other information from customers' terminals 2, provided information from the sellers' terminals 3, or payment information or other information from account settlement organization terminals 4.

The authorization judging means 14 serves to determine whether information received from an account settlement organization terminal 4 is for granting or denying authorization for a customer to use the account settlement organization designated by the customer; in case authorization has been given, the authorization judging means 14 instructs the transmitting means 12 to send the relevant order information and customer information to the seller's terminal concerned, or, in case authorization has been denied, instructs the transmitting means 12 to send to the customer's terminal 2 information requesting for cash transaction.

The customer information processing means 15 is a means to create and attach an ID number and a transaction code to each customer, or authorize an ID number that a customer wishes to use and has input and sent together with the customer information. In case the ID number desired by the customer is not permitted, the customer information processing means 15 instructs the transmitting means 12 to send to the customer's terminal 2 a request for inputting another ID number desired by the customer. The customer information processing means 15 also serves to instruct the database management means 11 to select a desired information item to be sent to a seller's terminal from among customer information stored in the customer information database 111, as well as giving instruction to the database management means 11 as to whether to store a specified customer information stored in the datable permanently or only for a given period of time. Furthermore, the customer information processing means 15 may create and attach an order code to each order from a customer and instruct the order information database 113 to store the order code as a part of the information on the pertinent order.

An ID number and a transaction code are created and attached each time a customer information confidentiality request has been received from a customer's terminal 2. When there has been no such request from the customer's terminal 2, the customer information processing means 15 creates neither an ID number nor a transaction code so that only the customer information sent from the customer's terminal 2, such as the name, the address, etc., is managed in the customer information database 111. However, in case a request has been made from a customer's terminal 2, the customer information processing means 15 creates or approves an IDnumber and a transaction code so that the ID number and the transaction code are managed in the customer information database 111 together with the name, the address and other customer information sent from the customer's terminal 2.

Selection of a given information item from among the customer information is processed in response to a request from a customer's terminal 2. To be more specific, the customer information processing means 15 judges whether there has been a confidentiality request from a customer's terminal 2 regarding the customer information. In case there has been no specific request from the customer's terminal 2, the customer information processing means 15 instructs the database management means 11 to select the information excluding the bank account number, the credit card number and other information concerning the financial organization, in other words select such data as the name, the address, etc, from among the customer information. In case there has been a request from the customer's terminal 2 to keep the name, the address or other personal information confidential, the customer information processing means 15 instructs the database management means 11 to extract solely the ID number or both the ID number and the transaction code.

Whether the customer information stored in the customer information database 111 should be saved permanently or removed after the elapse of a given period of time is instructed according to a request from the customer's terminal 2. To be more specific, the customer information processing means 15 judges whether there has been a request for removal of the customer information. In case there has been no specific request from the customer's terminal 2, the customer information processing means 15 gives no instruction to the database management means 11 so that the customer information is stored in the customer information database 111 permanently. In case there has been a request for removal of the customer information, the customer information processing means 15 instructs the database management means 11 to remove the customer information after the elapse of a given period of time, and the database management means 11 removes the customer information after the given period of time has elapsed. At that time, the database management means 11 may conduct the removal by extracting the pertinent customer information from the customer information database 111 and transferring it into a customer information removal database, which are created beforehand and managed by the database management means 11, and deleting the data in the customer information removal database after the elapse of a given period of time.

Even ifthere has not been a confidentiality request from a customer's terminal 2, it is a matter of course that the customer information processing means 15 may create an ID number and a transaction code and instruct the database management means 11 to include them in the customer information database 111, or instruct the database management means 11 to select and extract solely the ID number or the transaction code. Likewise, even if there has been no removal request, the customer information processing means 15 may instruct the database management means 11 to remove the customer information.

A customer's terminal 2 is a terminal that a customer uses for placing an order for an article or making a request. Each customer's terminal 2 is comprised of a receiving means 21 for receiving confirmation information or other information from the sales information coordinating organization 1, a transmitting means 22 for sending order information or the like to the sales information coordinating organization 1, a display means 23 for displaying various information, such as provided information that has been received, and an input means 24 used to input order information or the like. A personal computer with communications software installed or a similar apparatus is used as a customer's terminal 2. In this case, the communications software serves as the receiving means 21 and the transmitting means 22, while a keyboard, a mouse or a voice input device, e.g. a microphone, serves as the input means 24, and a display or an audio output device, such as speakers, serves as the display means 23. In addition to personal computers, there are of course other examples of information processing apparatuses that may be used, including servers and cellular phones.

A seller's terminal 3 is a terminal that a seller uses for registering information about the seller in the sales information coordinating organization 1, starting up a seller's own mail-order site or receiving order information or customer information from the sales information coordinating organization 1. Each seller's terminal 3 is comprised of a receiving means 31 for receiving order information or other information from the sales information coordinating organization 1, a transmitting means 32 for sending information concerning the seller, etc. to the sales information coordinating organization 1, a display means 33 for displaying various information, such as order information from the sales information coordinating organization 1, and an input means 34 used to input information concerning the seller, items or services provided, etc. A personal computer with communications software installed or a similar apparatus is used as a seller's terminal 3. In this case, the communications software serves as the receiving means 31 and the transmitting means 32, while a keyboard, a mouse or a voice input device, e.g. a microphone, serves as the input means 34, and a display or an audio output device, such as speakers, serves as the display means 33. In addition to personal computers, there are of course other examples of information processing apparatuses that may be used, including servers and cellular phones.

An account settlement organization terminal 4 is a terminal at an organization handling payment for a transaction item and used for receiving from the sales information coordinating organization 1 payment instruction information, which is an instruction concerning payment to a seller and includes such data as the account number of the seller, the amount to be transferred to the account, etc. In addition to receiving payment instruction information, an account settlement organization terminal 4 may also serve to make a judgement on a request from a customer for authorization to use the account settlement organization and transmit the result of the judgement, i.e. whether authorization is granted or denied, to the sales information coordinating organization 1. An account settlement organization terminal 4 has a means 43 to receive information that includes at least payment instruction information and order information from the sales information coordinating organization 1. In addition to the receiving means 43, an account settlement organization terminal 4 may be provided also with a database management means 41 for managing an account settlement organization customer database 411 that stores information on customers of the account settlement organization, a transmitting means 42 for sending authorization information etc. to the sales information coordinating organization 1, and an authorization judging means 44 for judging whether to permit a specific to use the account settlement organization, and the aforementioned receiving means 43 may a receiving means 43 may also serve to receive authorization request or other information from the sales information coordinating organization 1. Actually, account settlement organizations are financial organizations, such as banks, credit card corporations, and the like.

When an account settlement organization terminal 4 has received an authorization request from the sales information coordinating organization 1 inquiring whether a customer should be permitted to use that particular account settlement organization, the authorization judging means 44 of the account settlement organization 4 compares the names, the card number or other data of the customer specified in the authorization request with the data stored in the account settlement organization customer database 411 and carries out necessary processing, thereby determining whether authorization should be granted.

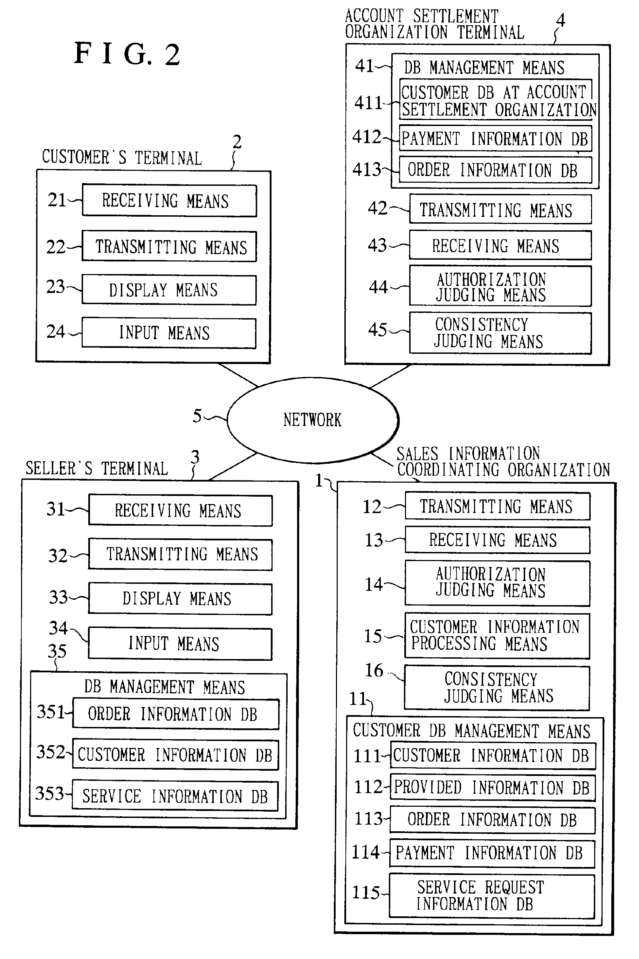

The account settlement organization terminal 4 may also be provided with a payment information database 412 adapted to store information concerning payments from customers so that the account settlement organization terminal 4 may send payment information to the sales information coordinating organization 1. It is also possible for the account settlement organization 4 to include an order information database 413 adapted to store information that concerns orders from customers and sent from the sales information coordinating organization 1, and a agreement judging means 45 for determining if there is agreement between order information from a customer and the information on the payment for the pertinent order so that the account settlement organization terminal 4 may judge whether the information on the order grees with the payment information for the same order by using the agreement judging means 45 and transmit the resulting agreement information to the sales information coordinating organization 1 (See Fig. 2). The sales information coordinating organization 1 then stores and manages the agreement information in the payment information database 114 by using the database management means 11.

In that case, the sales information coordinating organization 1 is required to have a agreement judging means 16 in addition to the authorization judging means 14. The agreement judging means 16 is a means to judge whether a customer has made an appropriate payment for his order and give instruction on processing which will be required thereafter. Upon receiving payment information from an account settlement organization terminal 4, the agreement judging means 16 judges whether the information on an order from a customer agrees with the amount the customer has paid to the account settlement organization for the pertinent order, the agreement judging means 16 conducting the agreement judgement by comparing and computing the order information database 113 and the payment information database 114. When consistency the presence of agreement has been ascertained, the agreement judging means 16 instructs the transmitting means 12 to transmit the relevant customer information and order information to the seller's terminal 3. In case of absence of agreement, the agreement judging means 16 instructs the transmitting means 12 to transmit confirmation information to the customer's terminal 2. In case the system calls for the sales information coordinating organization 1 to receive agreement information from account settlement organization terminals 4 and manage it by putting it as payment information into a database, the agreement judging means 16 is adapted to process the pertinent payment information to ascertain whether it agrees with the order. If there is agreement, the agreement judging means 16 instructs the transmitting means 12 to transmit the relevant customer information and order information to the seller's terminal 3. In case of absence of agreement, the agreement judging means 16 instructs the transmitting means 12 to transmit confirmation information to the customer's terminal 2.

The sales information coordinating organization 1 may function as an account settlement organization. In this case, the account settlement organization terminal 4 is incorporated in the sales information coordinating organization 1 so that the information is processed inside the sales information coordinating organization 1, with exchange of the information between the sales information coordinating organization 1 and the account settlement organization 4 omitted.

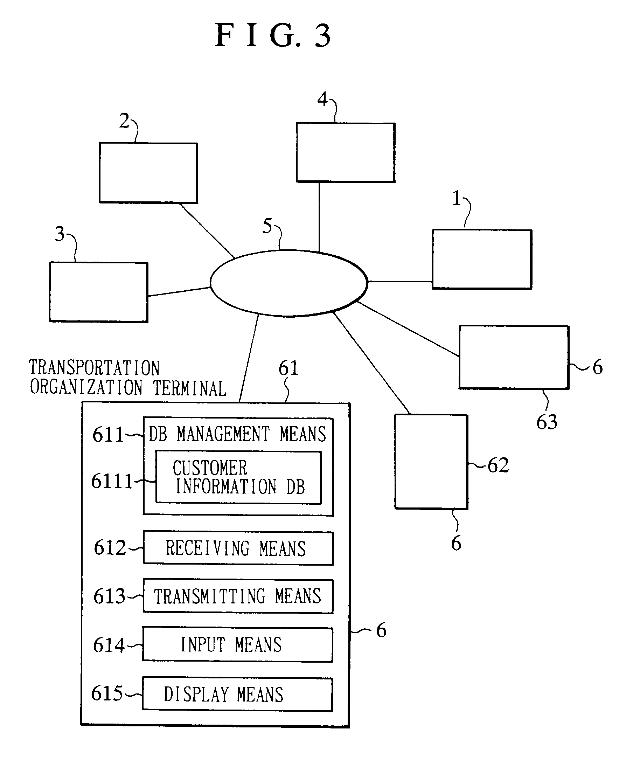

In addition to the sales information coordinating organization 1, the customers' terminals 2, the sellers' terminals 3 and the account settlement organization terminals 4, an electronic commerce system according to the invention may include service organizations 6, which are connected via the network 5 (See Fig. 3). A service organization terminal 6 may be, for example, a transport organization terminal 61, i.e. a terminal at a transport organization, such as a transport company that delivers transaction items from sellers to customers, an insurance organization terminal 62, i.e. a terminal at an insurance organization, such as an insurance company that handles insurance on transaction items, or a transaction item storage facility terminal 63, which isaterminal at a facility or the like to store transaction items. Of course, the system may consist of any number of terminals at a desired combination of these organizations and/or facilities.

Each transport organization terminal 61 is comprised of a receiving means 612, a transmitting means 613, an input means 614 and a display means 615 so as to receive customer information or information instructing delivery from the sales information coordinating organization 1 by using the receiving means 612, and display such information on the display means 615. Furthermore, a database management means 611 may be included so that information can be arranged as a database by the database management means 611 and stored in a customer information database 6111.

A transport organization can use its transport organization terminal 61 to display and confirm information on the seller and the customer for each transaction received from the sales information coordinating organization 1 or the seller, go to the seller to pick up the item to be delivered and deliver the item to either the customer or the pertinent storage facility. To be more specific, in case the customer information received from the sales information coordinating organization 1 includes the name and the address of the customer, the transport organization delivers the item to the address-of the customer. However, in case the customer information received from the sales information coordinating organization 1 consists solely of the ID number and the transaction code, the item is delivered to the storage facility designated by the transaction code.

Each insurance organization terminal 62 is a terminal at an insurance company or other body that handles insurance on transaction items and is comprised of a database management means, a receiving means, a transmitting means, an input means, a display means, etc. The sales information coordinating organization 1 takes out collective insurance with an insurance organization on all of the items of transactions carried out through the sales information coordinating organization 1. Therefore, it is unnecessary for each customer, seller or other service organization to take out an individual insurance, and safe transaction is ensured, with each customer and service organization guaranteed against damage to transaction items as well as postage or carriage in case of return of items, and each seller guaranteed to be protected from possible nonpayment. Should there be a claim from a customer's terminal 2, a seller's terminal 3 or other service organization terminal 6, the sales information coordinating organization 1 sends an insurance claim to the pertinent insurance organization terminal 62, and the insurance organization terminal 62 transmits a response to said claim to the sales information coordinating organization 1. The sales information coordinating organization 1 then transmits the received response to the customer's terminal 2, the seller's terminal 3 or the service organization terminal 6. Or, a customer may individually request through the sales information coordinating organization 1 for reparation insurance, travel accident insurance or the like to be handled by such an insurance company. In that case, an insurance claim or other request can be made from the customer's terminal 2 through the sales information coordinating organization 1 to the insurance organization terminal 62.

Each transaction item storage facility terminal 63 is a terminal at a facility where transaction items for customers are delivered from transport organizations and kept until customers come to pick them up, and is comprised of a database management means, a receiving means, a transmitting means, an input means, a display means, etc. Specific example of such facilities include various private facilities, such as convenience stores and gas stations, and public facilities, such as post offices. These facilities are identified by transaction codes. From the sales information coordinating organization 1, a transaction item storage facility terminal 63 receives and displays data of a transaction item to be delivered and either the ID number corresponding to the transaction item or the order code that identifies the transaction, i.e. the transaction item, the name of the buyer, etc. After the customer receives the transaction item, the transaction item storage facility terminal 63 may input data regarding completion of the transaction and transmit the data to the sales information coordinating organization 1. The system allows the customer to receive the transaction item without disclosing his personal information; the customer can pick up his order simply by providing the ID number or the order code, or, in addition to that, paying for the order.

An electronic commerce system according to the invention does not always require sellers' terminals 3 or account settlement organization terminals 4; there are configuration where the sales information coordinating organization 1 and customers' terminals 2 alone are connected through a network 5, or where the sales information coordinating organization 1, customers' terminals 2 and sellers' terminals 3 alone are connected through a network 5.

In case the sales information coordinating organization 1 and customers' terminals 2 alone are connected through a network 5, provided information is stored in the provided information database 112 of the sales information coordinating organization 1 beforehand, and the sales information coordinating organization 1 transmits mail order site pages which display items provided by a plurality of sellers, their prices, etc.

Next, a procedure to be followed when a customer purchases an item using the present invention is explained. Prior to transaction, a seller transmits provided information, such as the name, address and the e-mail address of the seller, transaction items and their prices, etc., from a seller's terminal 3 to the sales information coordinating organization 1. The sales information coordinating organization 1 receives the provided information from the seller's terminal 3 and stores the information in the provided information database 112. Furthermore, the seller registers its mail order site in the sales information coordinating organization 1 and is given a sales information coordinating organization certification mark by the sales information coordinating organization 1. The seller fixes a registered mark tag 701 indicating certification by the sales information coordinating organization 1 in the seller's own mail order site page 70, thereby setting its terminal so as to be capable of requesting the sales information coordinating organization 1 to transmit to the seller pages that are sent to the sales information coordinating organization 1.

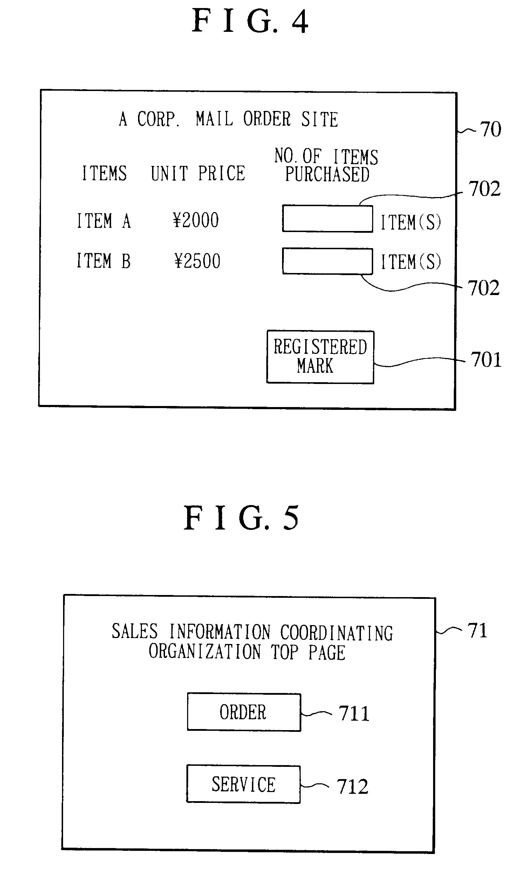

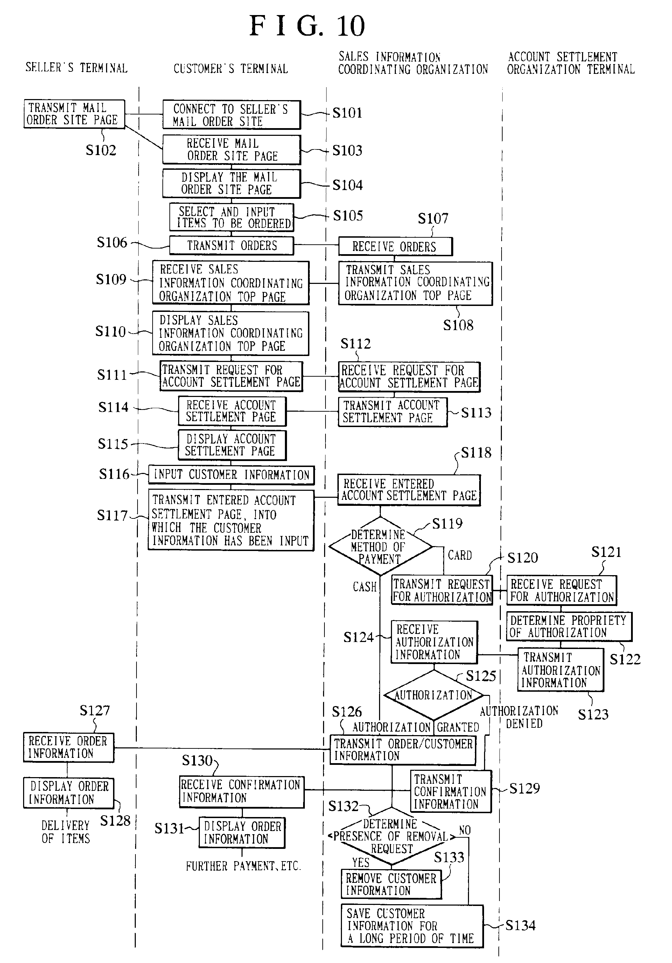

Using the customer's terminal 2, the customer accesses the seller's mail order site which has been given the registered mark indicating certification by the sales information coordinating organization 1 (S101: "S" meaning "Step" but simply abbreviated as "S" hereinafter) . The seller's terminal 3 transmits the mail order site page 70 (S102), and the customer's terminal 2 receives (S103) and displays the mail order site page 70 (S104) (See Fig. 10). Transaction items offered by the seller and their unit prices are displayed on the mail order site page 70, and boxes for inputting desired numbers of items to be purchased and the registered mark tag 701 are displayed (See Fig. 4).

Next, items and numbers to be ordered and their prices are designated and input on the mail order site page 70 by using the customer's terminal 2 (S105). All the customer has to do is simply inputting the desired number or numbers of items in boxes for desired number of items, i.e. order quantity fields 702, which are provided for respective items. After the input, the customer selects the sales information coordinating organization certification tag 701, thereby transmitting the name(s) and the quantity of the ordered item(s) to the sales information coordinating organization 1 and requesting for transmission of the sales information coordinating organization top page 71 (S106). The sales information coordinating organization 1 receives, from the customer's terminal 2, the information concerning the name(s) and the quantity of the ordered item(s) and the request for transmission of the sales information coordinating organization top page 71 (S107), and transmits the sales information coordinating organization top page 71 to the customer's terminal 2 (S108). The customer's terminal 2 receives (S109) and displays (S110) the sales information coordinating organization top page 71. The sales information coordinating organization top page 1 includes an order tag 711 and a service tag 712. When placing an order for a transaction item or items, the customer selects the order tag 711, thereby requesting the sales information coordinating organization 1 to send a sales information coordinating organization account settlement page 72 (S111). The sales information coordinating organization 1 receives the request for the transmission of a sales information coordinating organization account settlement page 72 (S112), and creates a sales information coordinating organization account settlement page 72 by processing the information received from the customer's terminal 2, i.e. the information on the ordered items and their quantities. The sales information coordinating organization 1 transmits the sales information coordinating organization account settlement page 72 (S113), which the customer's terminal 2 receives (S114) and displays (S115).

Displayed on each sales information coordinating organization account settlement page 72 are the name of the seller from which purchase is made; information input on a mail order site page 70, such as ordered items as well as their quantities, unit prices, tax, the total amount, etc.; boxes for inputting the name, address and age of the customer and the transaction facility the customer wants to use; boxes for selecting the payment method; boxes for inputting credit card numbers and the like; a purchase submit tag 721; a confidentiality request tag 722; an information removal request tag 723 and a purchase change tag 724. The customer inputs the customer's personal data by using the input means 24 of the customer's terminal 2 (S116), and selects the purchase submit tag 721. In case any change has to be made in the order at this stage, the customer selects the purchase change tag 724. When the purchase change tag 724 has been chosen, connection is made to the seller's mail order site (S101), and the seller's mail order site page 70 is received and displayed (S103)(S104) so that the transaction procedure has to be repeated from the very beginning. Having received the sales information coordinating organization account settlement page 72, the sales information coordinating organization 1 processes the account settlement page 72 to arrange the order information and the customer information into a database by using the database management means 11, which stores the two types of information in the customer information database 111 and the order information database 113 respectively.

The confidentiality request tag 722 is a tag a customer selects when wishing to keep his name, address, age, telephone number, e-mail address, etc. confidential from a seller. Although the present embodiment is provided with a single confidentiality request tag 722 for requesting confidentiality of all the personal data of a customer in one lot, a confidentiality request tag may be provided for each category of data, such as the address, the name, etc.

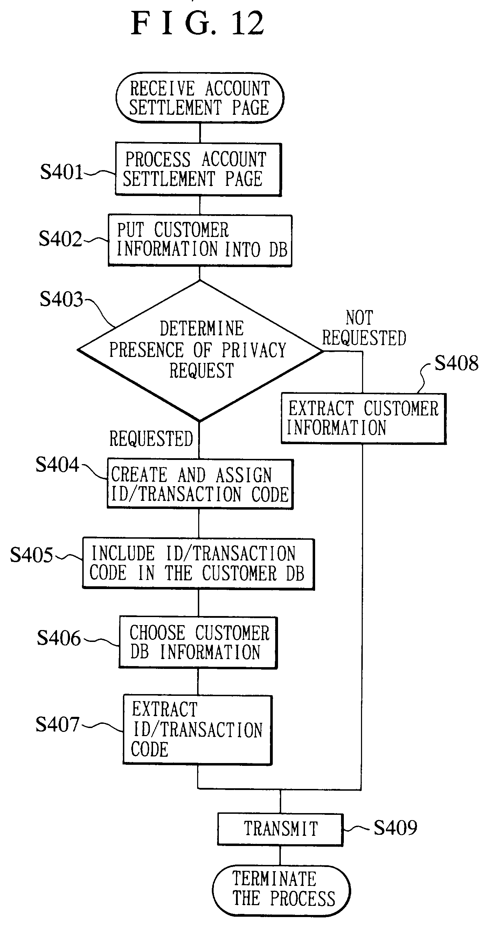

The sales information coordinating organization 1 confirms and processes the aforementioned account settlement page 72 by using the customer information processing means 15 (S401) and puts the customer information into a database by the database management means 11 (S402) (See Fig. 12). Next, using the customer information processing means 15, the sales information coordinating organization 1 determines whether the confidentiality request tag 722 has been selected or not, in other words whether the customer has requested to keep his personal data confidential (S403). In case the confidentiality request tag 722 has been selected, the sales information coordinating organization 1 uses the customer information processing means 15 to creates an ID number and a transaction code and attach them to the customer (S404). Or, in case the sales information coordinating organization 1 has received the ID number that the customer wishes to use and has transmitted (has it together with the customer information from the customer's terminal 2, the customer information processing means 15 may determine whether or not to approve the ID number requested by the customer by searching the customer information data base to see if there is the same ID number and may approve and saidattach the ID number to the customer according to the result of the search. At that time, in case the ID number cannot be approved, giventhe customer information processing means 15 instructs the transmitting means 12 to transmit to the customer's terminal 2 request to input another ID number desired. An ID number and a transaction code are created and given each time a transaction is made. As an alternative method, however, the ID number and the transaction code attached to the first transaction conducted by a customer may be used from subsequent transactions instead of giving an ID number and a transaction code each time. In that case, when making a transaction, the customer is requested to simply input either the ID number alone or both the ID number and the transaction code. An ID number and a transaction code may be attached to a customer even if the confidentiality request tag 722 has not been selected.

Attaching an ID number and a transaction code is performed by the transmitting means 12 transmitting the notation of the transaction item storage facility which is 2 concerned by the transmitting means identified by the ID number and the transaction code to the pertinent customer's terminal 2. The customer's terminal 2 receives and displays the notation of the transaction item storage facility which is identified by the ID number and the transaction code, and the customer confirms the displayed information. The sales information coordinating organization 1 arranges the ID number and the transaction code that have been attached to the customer by the customer information processing means 15 into a database by the database management means 11 and stores them in the customer information database 111 together with the other personal information of the customer (S405).

transmits When transmitting the order information to the seller's terminal 3the order information to the seller's terminal 3 (S126), the sales information coordinating organization 1 may conveniently transmit the notation of the transaction item storage facility, which is identified by the ID number and the transaction code, to the customer's terminal 2 by the transmitting means 12. At that time, the customer information, too, is transmitted to the seller's terminal 3. However, in case the confidentiality request tag 722 has been selected, the customer information processing means 15 instructs the database management means 11 to make a selection from the customer information database 111 and extract solely the ID number or both the ID number and the transaction code. The database management means 11 makes a selection from the customer information database 111 (S406) and extracts either the ID number alone or both the ID number and the transaction code (S407), and transmits the extracted data to the seller's terminal 3 (S409). In case the confidentiality request tag 722 has not been selected, the customer information processing means 15 instructs the database management means 11 to extract information including the name and the address from the customer information database 111. The database management means 11 extracts information including the name and the address (S408), and transmits the extracted data to the seller's terminal 3 (S409). It is of course possible to transmit without differentiating an ID number alone or both an ID number and a transaction code to a seller even if the confidentiality request tag 722 has not been selected.

As a result of selecting the confidentiality request tag 722 as described above, the order information and the customer information on the sales information coordinating organization account settlement page 72 are transmitted to the sales information coordinating organization 1 (S117). The sales information coordinating organization 1 receives the order information and the customer information (S118), and by using the database management means 11, arranges said two types of information into separate, individual databases to be respectively stored in the customer information database 111 and the order information database 113.

By using the customer information processing means 15, the sales information coordinating organization 1 ascertains the method of payment selected by the customer on the account settlement page 72 (S119). In case the sales information coordinating organization 1 judges that the customer desires cash transaction, the sales information coordinating organization 1 immediately instructs the transmitting means 12 to transmit the order information to the seller's terminal 3, and the transmitting means 12 transmits the order information to the seller's terminal 3 (S126). In case the sales information coordinating organization 1 judges that the customer desires to use a credit card, an authorization request asking whether the customer is allowed to use the account settlement organization concerned is transmitted together with the customer information, which includes the credit card number, from the sales information coordinating organization 1 to the account settlement organization terminal 4 (S120). The account settlement organization terminal 4 receives the authorization request and the customer information(S121). Thus requested to determine whether the customer may use the pertinent account settlement organization, the account settlement organization terminal 4 causes the database management means 41 to search the account settlement organization customer database 411 and compare the data found in the database with the customer information received from the sales information coordinating organization 1, thereby determining whether or not to grant authorization (S122), and transmits the authorization information, i.e. the result of judgement, to the sales information coordinating organization 1 (S123). The sales information coordinating organization 1 receives the authorization information (S124) and ascertains the authorization information by using the authorization judging means 14 (S125). In case the authorization judging means 14 determines that authorization has been granted, the authorization judging means 14 instructs the transmitting means 12 to transmit the order information and the customer information to the seller's terminal 3, and the transmitting means 12 transmits the order information and the customer information to the seller's terminal 3 (S126). The seller's terminal 3 receives the order information and the customer information (S127) and displays the order information (S128).

In case the authorization judging means 14 determines that authorization has not been granted, the authorization judging means 14 creates a confirmation information page 73, which is then sent to the customer's terminal 2 by the transmitting means 12 (S129). The customer's terminal 2 receives the confirmation information page 73 (S130) and displays the confirmation information page 73 (S131). In this case, the confirmation information page 73 includes a transaction continue tag 731 representing an intention to continue the transaction by cash payment and a transaction cancel tag 732 representing an intention to discontinue transaction. By selecting the transaction continue tag 731, the transaction continues; in other words, request for continuation is transmitted to the sales information coordinating organization 1, and the sales information coordinating organization 1 receives the request for continuation and transmits the order information to the seller's terminal 3. By selecting the transaction cancel tag 732, the transaction is discontinued.

The sales information coordinating organization 1 may transmit the order information and the customer information to the customer's terminal 2 prior to either determining the payment method (S119) or transmitting the order information to the seller's terminal (S126). In that case, the customer's terminal 2 receives and displays the order information and the customer information, which the customer confirms, and, thereafter, confirmation may be made from the customer' s terminal 2 to the sales information coordinating organization 1 and an intention to continue the transaction may be transmitted. After receiving said intention, the sales information coordinating organization 1 takes the subsequent steps.

The information removal request tag 723 is a tag to be selected when a customer does not want his customer information to be retained by the sales information coordinating organization 1. By the customer information processing means 15, the sales information coordinating organization 1 determines whether the information removal request tag 723 has been selected by the customer's terminal 2 (S132). In case a removal request has been ascertained, the customer information stored in the sales information coordinating organization 1 is removed after the elapse of a given period of time (S133). In case there is no removal request, the customer information is saved permanently
(S134).

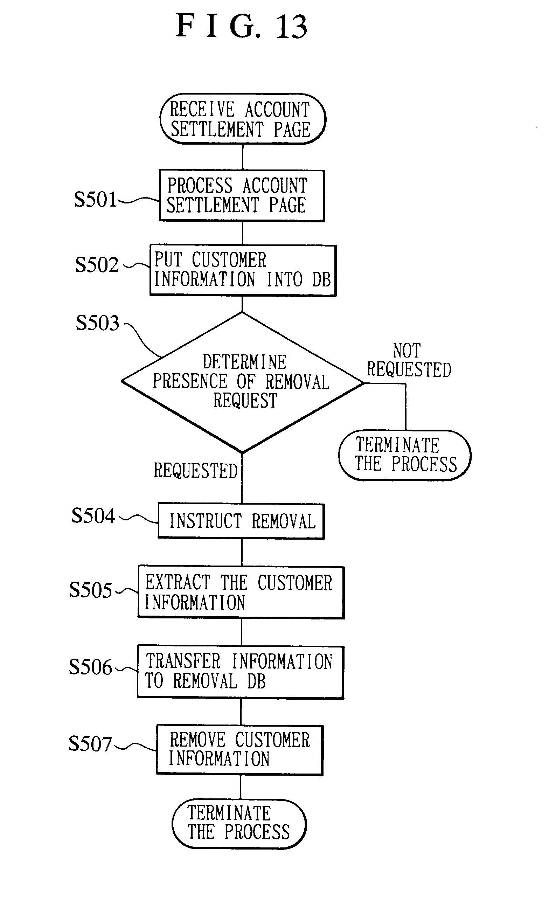

To explain it in detail, the sales information coordinating organization 1 which has received an account settlement page 72 acknowledges and processes the account settlement page 72 by the customer information processing means 15 (S501), and arranges the customer information into a database and stores it in the customer information database 111 by the database management means 11 (S502). Next, the customer information processing means 15 determines that whether there has been a removal request (S503). In case the customer information processing means 15 ascertains the presence of a removal request, the customer information processing means 15 specifies the customer information and instructs the database management means 11 to remove is (S504). Having received the instruction, the database management means 11 extracts a given customer information from the customer information database 111 (S505) and transfers it to the customer information removal database (S506). The customer information stored in the customer information removal database is removed by the database management means 11 after the elapse of a given period of time, which is about one month (S507). In case there is no removal request, no processing is performed so that the information stored in the customer information database 111 is saved unchanged (See Fig. 13). It is also possible to remove all the customer data without differentiating after the elapse of a given-period of time, even if there has been no removal request.

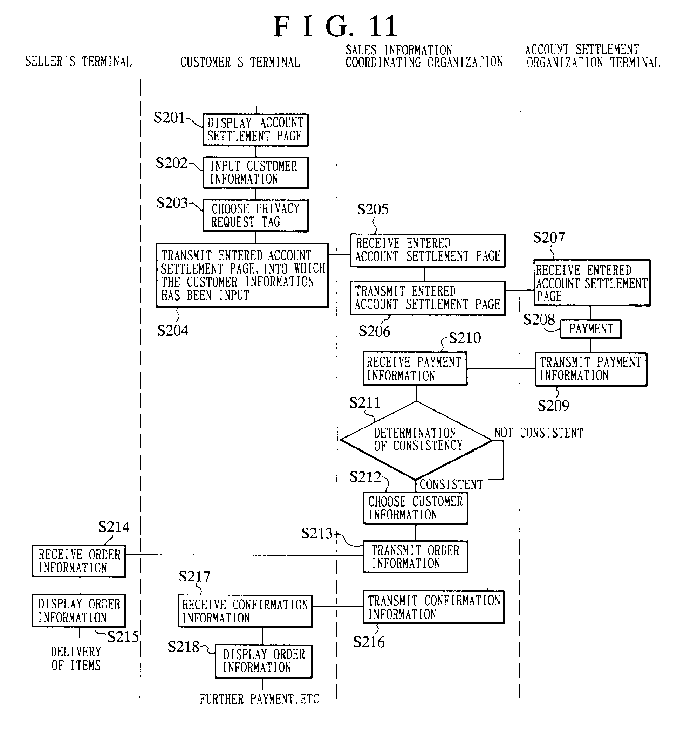

The sales information coordinating organization 1 may carry out a transaction after confirming that the account has been settled (See Fig. 11). In this case, after the account settlement organization has settled the account, the payment information is transmitted from the account settlement organization terminal 4 to the sales information coordinating organization 1. To be more specific, the sales information coordinating organization 1 transmits the account settlement page 72 to the account settlement organization terminal 4 (S206), and the account settlement organization terminal 4 receives said account settlement page 72 (S207). The account settlement organization then settles the account (S208) and transmits the payment information to the sales information coordinating organization 1 (S209). The sales information coordinating organization 1 receives the pay account settlement information (S210) and, by using the database management means 11, arranges it into a database and stores the data in the payment information database 114 (S211). Thereafter, the sales information coordinating organization 1 judges whether the information on the order from the customer concerning the pertinent transaction agrees with its payment information by using the agreement judging means 16, In case the presence of agreement has been ascertained, in other words should the amount of the purchase correspond to the amount of the actual payment, the agreement judging means 16 instructs the transmitting means 12 to make a transmission to the seller's terminal 3 so that the transmitting means 12 transmits the order information and the customer information to the seller's terminal 3 (S213). In case the agreement judging means 16 ascertains absence of agreement, the transmitting means 12 transmits confirmation information to the customer's terminal 2, thereby requesting the customer to make a further payment (S216).

Furthermore, the account settlement organization terminal may function in such a manner that the database management means 41 extracts from the order information stored in the order information database 413 the total amount of prices for the order and, from the payment information database 412, the amount of payment received or similar information corresponding to the pertinent order; the consistency agreement judging means 45 makes a judgement about agreement between the extracted data, i.e. the total amount of the order and the amount actually received; and that the transmitting means 42 transmits the payment information and the information indicating presence or absence of agreement to the sales information coordinating organization 1. In this case, it is unnecessary for the sales information coordinating organization 1 to ascertain whether there is agreement. When this system is employed, the account settlement organization terminal 4 may bill the customer again by transmitting to the customer's terminal 2 confirmation information that requesting the customer to make a further payment.

From either the sales information coordinating organization 1 or the account settlement organization terminal 4, the customer's terminal 2 receives (S217) and displays (S218) the confirmation information demanding a further payment, which leads the customer to make a further payment or follow other necessary procedure.

By transmitting a bill to the customer's terminal A2 or by other appropriate way, an account settlement organization terminal 4 may request a customer to pay for a transaction item transmitting a bill to the customer's terminal . When the customer has completed payment, the account settlement organization terminal 4 may save the payment information, such as the amount received, in the payment information database 412 and transmit the payment information, such as the amount received, to the sales information coordinating organization 1 by the transmitting means 42.

According to an alternative method, regardless of authorization information or payment information from an account settlement organization terminal 4, in other words without requesting the account settlement organization terminal 4 for authorization or determining agreement between account settlement information and order information, the sales information coordinating organization 1 may transmit an order information to the pertinent seller's terminal 3 concerned (S126) immediately after receiving the account settlement page 72 (S118) so that the seller dispatches the order. Then, either the seller's terminal 3 or the transport organization terminal 61 at the transport organization that has delivered the order transmits to the sales information coordinating organization 1 notification of completion of shipment indicating completion of the shipment from the seller. Having received said notification, the sales information coordinating organization 1 extracts the customer information and the provided information of the transaction that corresponds to said notification of completion of shipment, creates payment instruction information demands ademanding a further payment be made to the seller, transmits the customer information, the provided information and the payment instruction information to the account settlement organization terminal 4 . The account settlement organization terminal 4 receives and displays the customer information, the provided information and the payment instruction information from the sales information coordinating organization 1, and transfers the amount for the payment to the seller's account. The customer may pay the account settlement organization thereafter. In the system described above, in case the customer fails to make payment, the sales information coordinating organization 1 takes the responsibility and guarantees payment to the account settlement organization or the seller. However, as the sales information coordinating organization 1 has insurance on all the transactions, the payment made by the sales information coordinating organization 1 is covered by the insurance. To be more specific, upon receiving a request to fulfill its guarantee from the account settlement organization terminal 4 or the seller's terminal 3, the sales information coordinating organization 1 transmits an insurance claim to the insurance organization terminal 62. The insurance organization terminal 62 receives said insurance claim, and the insurance organization performs necessary processing. Furthermore, in case a customer fails to pick up his transaction item delivered to a transaction item storage facility, too, a return postage or carriage for returning the transaction item from the transaction item storage facility is covered in the same manner as for payment for a transaction item; the sales information coordinating organization 1 receives a request to fulfill its guarantee from the transaction item storage facility terminal 63, and transmits an insurance claim to the insurance organization terminal 62. The insurance organization terminal 62 receives said insurance claim, and the insurance organization performs necessary processing.

Concerning customer information transmitted from the sales information coordinating organization 1 to a seller's terminal 3, in case the confidentiality request tag 722 has been selected on a sales information coordinating organization account settlement page 72 transmitted from a customer's terminal 2 (S203), the database management means 11 extracts either the ID number alone or combination both the ID number and the transaction code from the customer information database 111 (S212) according to the instruction from the customer information processing means 15, and the transmitting means 12 transmits said data as the customer information to the seller's terminal 3 (S213) (See Fig. 11).

The seller's terminal 3 receives (S127) and displays (S128) the customer information and the order information from the sales information coordinating organization 1, and the seller dispatches the transaction item to the customer. In case the confidentiality request tag 722 on the sales information coordinating organization account settlement page 72 has been selected, either the ID number alone or both the ID number and the transaction code is displayed from among the all the customer information. In this case, if the ID number alone is displayed, the seller delivers the transaction item to the relevant transport organization. If the ID number and the transaction code are displayed, however, the seller delivers the transaction item to the transaction item storage facility that has been specified beforehand in accordance with each respective transaction code. The customer goes to the transaction item storage facility to pick up his order. At that time, the customer can pick up the item simply by presenting the ID number. In case of cash transaction, however, the customer is also required to pay in caseh on the spot to receive the item.

In case the confidentiality request tag 722 on the sales information coordinating organization account settlement page 72 has been selected, the database management means 11 of the sales information coordinating organization 1 extracts the customer information including the ID number and the transaction code from the customer information database in accordance with the instruction from the customer information processing means 15, and the transmitting means 12 transmits the extracted information to the relevant transport organization terminal 61. The transport organization terminal 61 receives said customer information by the receiving means 612, arranges it into a database by using the database management means 611 and displays on the display means 615 . In case the transport organization receives from a seller a transaction item to which an ID number is attached, the transport organization inputs the ID number by using the input means 614, searches the customer information database 6111, which is managed by the database management means 611, to extract the address and other necessary data of the customer, and dispatches the transaction item to the customer.

In case the sales information coordinating organization 1 creates an order code for each respective order from every customer and stores those order codes in the order information database 113, the sales information coordinating organization 1 may extract a desired order code, the corresponding item ordered item and other necessary order information from the order information database 113 without transmitting the customer information to the pertinent seller's terminal 3. Or, in addition to the aforementioned order information, the sales information coordinating organization 1 may extract the corresponding transaction code and transmit the seller's terminal 3 order information that includes either the order code alone or both the order code and the transaction code. When the seller's terminal 3 receives the order information including both the order code and the transaction code, the seller's terminal 3 attaches the order code to the ordered item, which is then shipped to the transaction item storage facility specified by the transaction code. According to yet another example of methods, the sales information coordinating organization 1 transmits either an order code and a transaction code or both an order code and customer information, such as the address, to a transport organization terminal 61, and the transport organization terminal 61 receives and displays such information.

In case the information received by a transport organization terminal 61 consists of an order code and a transaction code, the transport organization terminal 61 goes to the seller to pick up the item with attached said order code and delivers it to the transaction item storage facility specified by the corresponding transaction code. In case the information received by a transport organization terminal 61 consists of an order code and customer information, such as the address of the customer, the transport organization terminal 61 goes to the seller to pick up the item with attached said order code and delivers it to the address or other location designated in the customer information. In case the item is delivered to a transaction item storage facility, the customer picks up the item at the transaction item storage facility by presenting the order code. Such a procedure may be followed only when a confidentiality request has been made from a customer's terminal 2 to the sales information coordinating organization 1 or regardless of whether there has been a confidentiality request.

Next, a procedure for handling a complaint from a customer, should, for example, the item delivered be different from the order or be damaged, or the order has not been delivered, is explained hereunder (See Fig. 13). First of all, the customer uses the customer's terminal 2 to access the mail order site of the seller, which has been given the registered mark indicating certification by the sales information coordinating organization 1, and receives and displays the mail order site page 70. Of course, the customer may directly access , receive and display the service menu page 74 of the sales information coordinating organization 1.

By using the customer's terminal 2, the customer selects the sales information coordinating organization certification tag 701 from the mail order site desktop window 70, thereby requesting the sales information coordinating organization 1 to transmit the sales information coordinating organization top page 71 (S301). The sales information coordinating organization 1 receives the request for transmission of the sales information coordinating organization top page 71 (S302) and transmits the sales information coordinating organization top page 71 (S303), which the customer's terminal 2 receives (S304) and displays (S305). Next, the customer selects the service tag 712 on the sales information coordinating organization top page 71, thereby requesting the sales information coordinating organization 1 to transmit the service menu page 74 (S306). The sales information coordinating organization 1 receives the request for transmission of the service menu page 74 (S307) and transmits the service menu page 74 (S308), which the customer's terminal 2 receives (S309) and displays (S310).

Displayed on the service menu page 74 are various tags, such as a complaint tag 741 to be selected when filing a complaint, an inquiry tag 742 to be selected when making an inquiry about delivery or the like, a return/exchange tag 743 to be selected when demanding a return or an exchange of transaction items, and an insurance tag 744 to be selected when claiming or taking out an insurance. By selecting the complaint tag 741, transmission of a complaint handling page 75 is requested to the sales information coordinating organization 1 (S311). The sales information coordinating organization 1 receives said request (S312) and transmits the complaint handling page 75 to the customer's terminal 2 (S313). The customer's terminal 2 receives (S314) and displays (S315) the complaint handling page 75.

Displayed on the complaint handling page 75 are boxes for inputting the name of the customer, the name of the seller from which the transaction item has been purchased, the ID number attached at the time of transaction of the item about which the customer is making a request for service, etc., as well as a box for inputting the nature or contents of the complaint. The customer inputs the name of the customer, the ID number, the name of the seller, the nature or contents of the complaint, etc. by using the input means 24 of the customer's terminal 2 (S316) and selects the submit tag 751.

As a result of selecting the submit tag 751, complaint information, such as the customer ID number, the name of the seller, the contents of the complaint, etc., on the complaint handling page 75 is transmitted to the sales information coordinating organization 1 (S317). The sales information coordinating organization 1 receives said complaint information (S318) and uses the database management means 11 to arrange the customer ID number, the name of the seller, the contents of the complaint, etc. into a database and store them in the service request information database 115.

Using the database management means 11, the sales information coordinating organization 1 extracts a desired complaint information item and judges where to send the information (S319) and, using the transmitting means 12, transmits the complaint information to the seller's terminal 3, the transport organization terminal 61 or other appropriate terminal (S320).

The seller's terminal 3 or the transport organization terminal 61 receives the information on a request for service from the sales information coordinating organization 1 by using the receiving means 31/612 (S321/S325) and displays said information by using the display means 33/615 (S322/S325). Thus, the seller or the carrier grasps the request or complaint of the customer. Thereafter, the seller or the carrier inputs a response to the request or complaint by using the input means 34/614 (S323/S327) and transmits the input to the sales information coordinating organization 1 by using the transmitting means 32/613 (S324/S328).

By the receiving means 13, the sales information coordinating organization 1 receives solution information, which is the response of the seller or the carrier to the complaint or the request (5329), and transmits the solution information to the customer's terminal 2 by using the transmitting means 12 (S330). The customer's terminal 2 receives said solution information from the sales information coordinating organization 1 by using the receiving means 21 (S331) and displays said information by using the display means 23 (S332) so that the customer is able to see the display and thus obtains the response to his complaint or request. Making an inquiry or requesting return or exchange of an item can be done by following the same procedure. When requesting an insurance service, the procedure from S105 onwards should be followed in the same manner as an ordinary transaction, after transmission of a request for service (S320).

### Effect of The Invention

As described above, according to claim 1 or claim 50 of the present invention, when a customer buys goods or receives other services by means of an electronic commerce transaction, the customer is able to easily obtain provided information on various sellers and make a transaction through a neutral third party, without the possibility of the customer's personal information being obtained or retained by unspecified sellers or even the seller from which the customer makes the purchase, or retained by the third party that acts as an intermediary in the transaction. Therefore, the parties concerned are ensured of (enabledable to carry out a transaction with a sense of security, and it is also possible for sellers to acquire more customers.

The invention claimed in claim 2 enables the selection of personal information of customers, thereby protecting the personal information of customers, and also ensures smooth transaction by making it possible to extract exclusively the data that is necessary from the customer information.

As it is possible for a customer to specify the information the customer desires to keep confidential, the invention claimed in claim 3 enables each customer to control his own personal information for himself.

As it is not necessary for a customer to repeatedly put his personal information on to a network, the invention claimed in claim 4 provides sufficient protection for personal information and ensures a transaction with a sense of security.

The invention claimed in claim 6 enables each customer to conduct a transaction with a sense of security, without the possibility of his personal information disclosed to the seller or the carrier of the transaction item or any other party, except for the sales information coordinating organization.

The invention claimed in any one of the claims from claim 7 to claim 9 enables each customer to conduct a quick and smooth transaction without the possibility of any information item concerning the customer being disclosed to the seller.

The invention claimed in claim 11 enables each customer to take part in a transaction with a sense of security, without the possibility of his financial information being disclosed to the seller. The invention claimed in claim 11 also enables the simplification of the procedure of payment by eliminating complexity of settling an account, and is capable of preventing a dispute concerning settlement of an account.

In addition to eliminating the possibility of the financial information of the customers being disclosed to the sellers, the invention claimed in claim 12 is capable of preventing a dispute concerning payment and enables the quick and smooth transaction.

The invention claimed in any one of the claims from claim 13 to claim 17 is capable of not only protecting the personal information of the customers but also providing the sellers with the safety of transactions. In addition, the invention enables the quick and smooth transaction, thereby providing such benefits as increase of customers and sellers taking part in electronic commerce, and, particularly for customers, a wider range of choice of transaction items, while sellers can enjoy the opportunity of acquiring more customers.

The invention claimed in claim 18 ensures for each customer a reliable transaction without the slightest possibility of his personal information, such as the name, the address, etc., being disclosed to the seller.

The invention claimed in claim 22 or claim 23 prevents problems such that an item that does not agree with the one ordered; no item has been delivered although payment has been made; there is nowhere to file a complaint; or contact is unsuccessful when a customer tries to make a complaint. As the invention is capable of easily and reliably transmitting a complaint or other request from a customer to a seller or obtaining a response from a seller, the customers can take part in electronic commerce with a sense of security. Furthermore, intermediation of a neutral third party makes it unnecessary for each customer to deal directly with the seller so that the customer can easily get satisfactory response with a procedure which is simple and easy to follow. To sellers, too, intermediation of a neutral third party offers benefits, such as making it unnecessary to deal directly with customers, thereby relieving sellers of troubles and inconveniences that might otherwise result from coping with customers and enabling the cost reduction.

The invention claimed in any one of the claims from claim 24 to claim 26 not only enables each customer to enjoy various services without his personal information disclosed but is also capable of speeding up transactions, thereby broadening the market for electronic commerce and giving sellers an opportunity of capturing acquiring more customers.

The invention claimed in claim 28 offers a safe transaction for each customer or seller using an electronic commerce system of the invention, without the necessity of following a complicated and inconvenient procedure even if a problem arises.

The invention claimed in claim 29 completely eliminates the possibility of personal information of each customer, such as the name, address, etc., being disclosed even to the transport organization handling shipment of the order. The invention is also convenient in that a customer may receive his order whenever convenient, instead of having to stay home when his order is expected to be delivered.

The invention claimed in claim 30 enables the speed-up of transmission of information for responding to a request for further service as well as the speed-up of distribution of goods.

The invention claimed in claim 31 or claim 32 enables each customer to control his own personal information for himself.

The invention claimed in claim 33 or claim 34 enables each customer to conduct a transaction with a sense of security, without the possibility of long-term retention of his personal information by any party.

In addition to eliminating the possibility of financial information of a customer being disclosed to the seller, the invention claimed in claim 36 is capable of preventing a dispute concerning settlement of an account. Furthermore, the invention makes it possible to conduct a transaction smoothly and quickly, and is also capable of offering sellers and account settlement organizations safe transactions.

The invention claimed in claim 37 enables each customer to discontinue or make a change should an error be made in the contents of the transaction or correct an error in the customer's own data, such as the address, etc., thereby ensuring reliable receipt of transaction items.

The invention claimed in claim 38 eliminates the possibility of financial information of a customer being disclosed to the seller and is also capable of preventing a dispute concerning settlement of account, thereby ensuring a safe transaction. Furthermore, the invention is also capable of offering sellers and account settlement organizations safe transactions.

The invention claimed in claim 40 or claim 42 enables each customer to conduct a reliable and safe transaction without the possibility of his personal information, such as the name, the address or the like, being disclosed to the seller.

The invention claimed in claim 44 enables each customer to conduct a reliable and safe transaction without the possibility of his personal information, such as the name, the address or the like, being disclosed to the seller or the transport organization.

The invention claimed in any one of the claims from claim 46 to claim 48 enables each customer to control his own personal information for himself.

As the invention claimed in claim 49 prevents problems such that an item that does not agree with the one ordered; no item has been delivered although payment has been made; there is nowhere to file a complaint; or contact is unsuccessful when a customer tries to make a complaint, the customers can take part in electronic commerce with a sense of security. Furthermore, intermediation of a neutral third party makes it unnecessary for each customer to deal directly with the seller so that the customer can easily get satisfactory response by following a simple and easy procedure. To sellers, too, intermediation of a neutral third party offers benefits, such as making it unnecessary to deal directly with customers, thereby relieving sellers of troubles and inconveniences resulting that might otherwise result from coping with customers and enabling the cost reduction.

The invention claimed in claim 5, claim 10, claim 35 or claim 39 enables sellers to collect the amount due for a sold item dependably and quickly.

The invention claimed in claim 19, claim 20, claim 21, claim 41, claim 43, claim 45 or claim 47 enables the transaction without disclosing the personal information of the customer to the seller at all. In case an e-e-mail address is used as the ID number, the invention is particularly effective in preventing discrimination losure of an individual by the e-mail address. Furthermore, in case a customer uses the same ID number for a plurality of transactions, too, the invention is effective in preventing sellers from collecting data in such a manner as using an ID number to grasp the tendency of a customer in placing an order.

### BRIEF DESCRIPTION OF THE DRAWINGS

Fig. 1 is a schematic diagram of an embodiment of the present invention.

Fig. 2 is a schematic diagram of another embodiment of the present invention.

Fig. 3 is a schematic diagram of yet another embodiment of the present invention.

Fig. 4 is an illustration of an embodiment of the desktop window of a seller's mail order site.

Fig. 5 is an illustration of a display of an embodiment of the desktop window of a sales information coordinating organization top page.

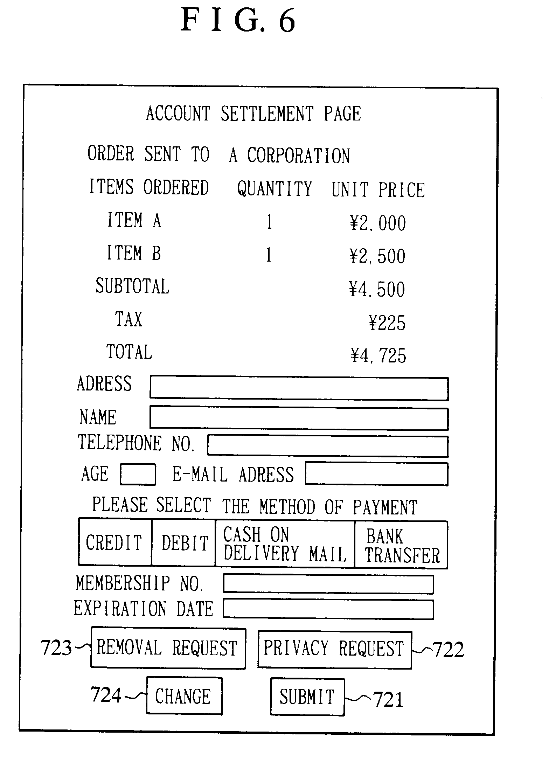

Fig. 6 is an illustration of an embodiment of the desktop window of an account settlement page.

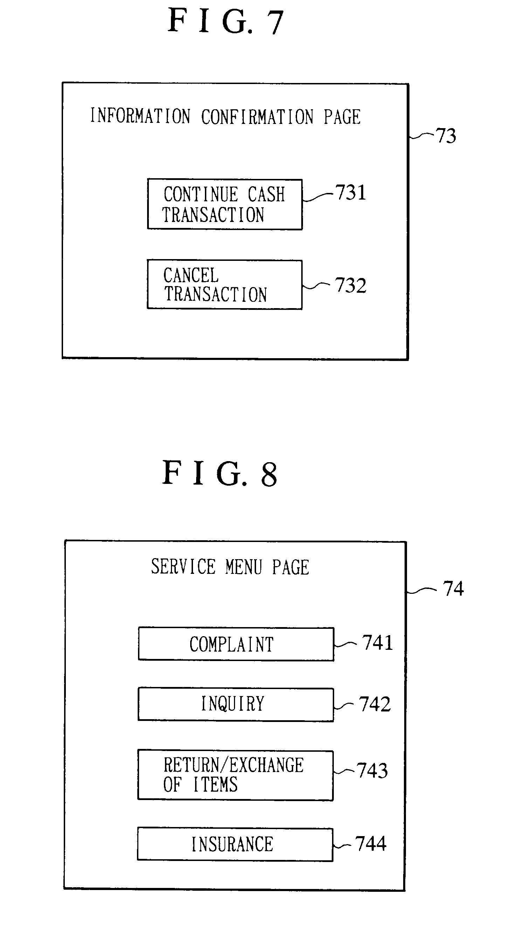

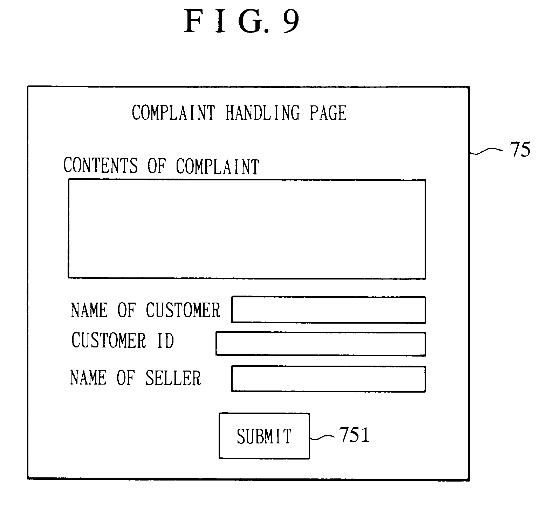

Fig. 7 is an illustration of a display of an embodiment of the desktop window of a confirmation information page.

Fig. 8 is an illustration of an embodiment of the desktop window of a service menu page.

Fig. 10 is a flow chart showing an embodiment of the process of purchasing an item according to the present invention.

Fig. 11 is a partial flow chart showing another embodiment of the process of purchasing an item according to the present invention.

Fig. 12 is a flow chart showing the process followed by the sales information coordinating organization to handle a confidentiality request for customer information.

Fig. 13 is a flow chart showing the process followed by the sales information coordinating organization to handle a request for removal of customer information.

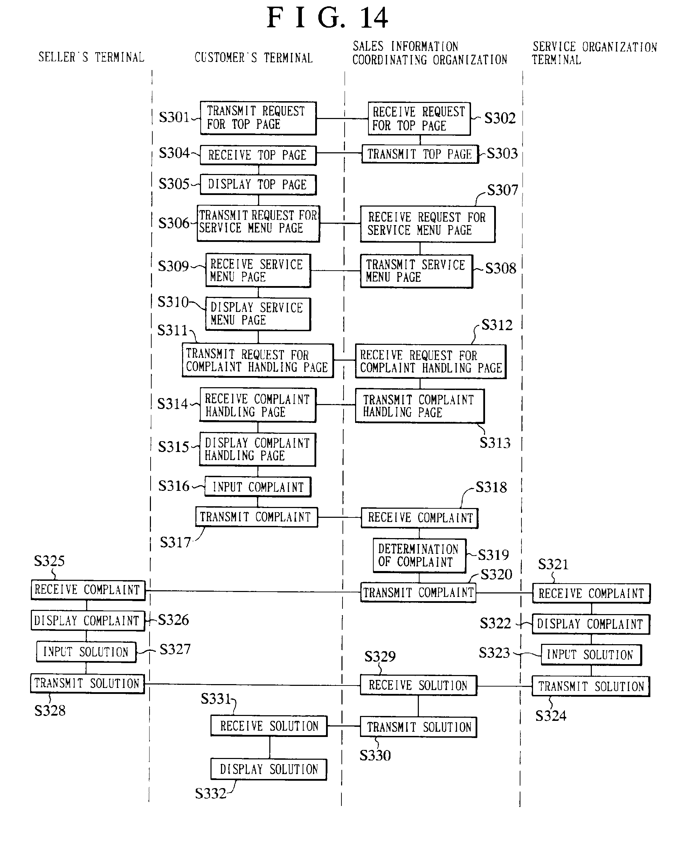

Fig. 14 is a flow chart showing an embodiment of the process of handling a complaint according to the present invention.

| Numeral Codes | |
|---|---|
| 1 | sales information coordinating organization |
| 2 | customer's terminal |
| 3 | seller's terminal |
| 4 | account settlement organization terminal |
| 5 | network |
| 6 | service organization terminal |
| 61 | transport organization terminal |
| 62 | insurance organization terminal |
| 63 | transaction item storage facility terminal |
| 70 | desktop window of a mail order site |
| 701 | registered mark tag indicating certification by the sales information coordinating organization 1 |
| 71 | sales information coordinating organization top |
| page | |
| 72 | account settlement page |
| 73 | confirmation information page |
| 74 | service menu page |

## Claims

1. An electronic commerce system including customers' terminals and a sales information coordinating organization connected to the system through a network, wherein:
each customer's terminal includes:
a means to request provided information to specify a seller, items to be provided by the seller and the prices for the items,
a means to receive said provided information transmitted from the sales information coordinating organization,
a means to display said provided information transmitted from the sales information coordinating organization,
a means to input customer information and order information that serves to specify a transaction item or transaction items, and
a means to transmit said customer information and order information to the sales information coordinating organization; and
the sales information coordinating organization includes:
a means to transmit provided information to a customer's terminal at a request from the customer's terminal,
a means to receive customer information and order information from a customer's terminal,
a means to store customer information from a customer's terminal,
a means to store said order information from a customer's terminal,
a means to store said provided information, and
a means to remove customer information.

2. An electronic commerce system as claimed in claim 1, wherein the sales information coordinating organization has a means to select a desired information item from said customer information that is stored.

3. An electronic commerce system as claimed in claim 1, wherein:
each customer's terminal includes:
a means to make a request to the sales information coordinating organization to keep a desired information item of said customer information confidential; and
the sales information coordinating organization includes:
a means to select, in response to said request a desired information item from said customer information that is stored.

4. An electronic commerce system as claimed in any one of the claims from claim 1 to claim 3, wherein:
the sales information coordinating organization includes:
a means to attach an ID number to a customer upon receiving customer information and order information from said customer's terminal,
a means to include said ID number in the customer information, and
a means to transmit said ID number to the customer's terminal; and
each customer's terminal includes:
a means to receive such an ID number, and
a means to display the ID number.

5. An electronic commerce system as claimed in any one of the claims from claim 1 to claim 4, wherein:
the sales information coordinating organization includes:
a means to provide an order code upon receiving order information from a customer's terminal,
a means to include said order code in the order information, and
a means to transmit said order code to the customer's terminal; and
each customer's terminal includes:
a means to receive such an order code, and
a means to display the order code.

6. An electronic commerce system as claimed in claim 4, wherein:
the sales information coordinating organization includes:
a means to attach a transaction code to said customer,
a means to include said transaction code in the customer information, and
a means to transmit said transaction code to the customer's terminal; and
each customer's terminal includes:
a means to receive such a transaction code, and
a means to display the transaction code.

7. An electronic commerce system including customers' terminals, sellers' terminals and a sales information coordinating organization connected to the system through a network, wherein:
each customer's terminal includes:
a means to make a request to a seller's terminal for provided information to specify a seller, items to be provided by the seller and the prices for the items,
a means to receive said provided information transmitted from a seller's terminal,
a means to display said provided information transmitted from seller's terminal,
a means to input customer information and order information that serves to specify a transaction item or transaction items, and
a means to transmit said customer information and order information to the sales information coordinating organization;
each seller's terminal includes:
a means to transmit said provided information to the network; and
the sales information coordinating organization includes:
a means to receive customer information and order information from a customer's terminal,
a means to store customer information from a customer's terminal,
a means to store said order information from a customer's terminal,
a means to store said provided information, and
a means to remove customer information.

8. An electronic commerce system as claimed in claim 7 and including customers' terminals, sellers' terminals and a sales information coordinating organization connected together through a network, wherein:
each seller's terminal includes:
a means to transmit to the sales information coordinating organization provided information used for specifying the seller, items to be provided by the seller and the prices for the items,
a means to receive order information from the sales information coordinating organization, and
a means to display said order information; and
the sales information coordinating organization includes:
a means to receive said provided information from a seller's terminal,
a means to store said provided information, and
a means to transmit order information to a seller's terminal.

9. An electronic commerce system as claimed in claim 8 and including customers' terminals, sellers' terminals and a sales information coordinating organization connected together through a network, wherein:
each seller's terminal includes:
a means to receive customer information from the sales information coordinating organization, and
a means to display customer information; and the sales information coordinating organization includes:
a means to transmit customer information to a seller's terminal.

10. An electronic commerce system as claimed in any one of the claims from claim 7 to claim 9 and including account settlement organization terminals in addition to customers' terminals, sellers' terminals and a sales information coordinating organization, all of which are connected to the system through a network, wherein:
each account settlement organization terminal includes:
a means to receive customer information, provided information and payment instruction information from the sales information coordinating organization;
each seller's terminal includes:
a means to transmit notification of completion of shipment to the sales information coordinating organization; and
the sales information coordinating organization includes:
a means to receive notification of completion of shipment from a seller's terminal,
a means to extract the customer information and the provided information concerning the transaction that corresponds to said notification of completion of shipment so as to create payment instruction information concerning said transaction, and
a means to transmit customer information, provided information and payment instruction information to an account settlement organization terminal.

11. An electronic commerce system including customers' terminals, sellers' terminals account settlement organization terminals and a sales information coordinating organization connected to the system through a network, wherein:
each customer's terminal includes:
a means to make a request to a seller's terminal for provided information to specify a seller, items to be provided by the seller and the prices for the items,
a means to receive said provided information transmitted from the seller's terminal,
a means to display said provided information transmitted from the seller's terminal,
a means to input customer information and order information that serves to specify a transaction item or transaction items, and
a means to transmit said customer information and order information to the sales information coordinating organization;
each seller's terminal includes:
a means to transmit to the sales information coordinating organization provided information used for specifying items to be provided by the seller and the prices for the items,
a means to transmit said provided information to the network,
a means to receive from the sales information coordinating organization either order information or a both order information and customer information,
a means to store either order information or both order information and customer information,
a means to display said order information or both the order information and the customer information;
each account settlement organization terminal includes:
a means to receive customer information and authorization request from the sales information coordinating organization,
a means to store information on customers of the account settlement organization,
a means to confirm customer information from the sales information coordinating organization and information on customers of the account settlement organization (the settlement and judge whether to give or deny authorization to authorization???the pertinent customer to use the account settlement organization, and
a means to transmit to the sales information coordinating organization authorization information that represents the result of said judgement; and
the sales information coordinating organization includes:
a means to receive customer information and order information from a customer's terminal, authorization judgment information from an account settlement organization terminal, and provided information from a seller's terminal,
a means to store customer information from a customer's terminal,
a means to store said order information from a customer's terminal,
a means to store provided information from a seller's terminal,
a means to receive authorization judgment information from an account settlement organization terminal,
a means to process said authorization judgment information so as to judge whether or not authorization has been granted,
a means to transmit either order information or both order information and customer information to a seller's terminal in case said judging means judges that authorization has been granted, and
a means to remove customer information.

12. An electronic commerce system as claimed in claim 11, wherein:
the sales information coordinating organization includes:
a means to transmit a request for cash payment to a customer's terminal in case denial of authorization has been ascertained by the means to process authorization judgment information from an account settlement organization so as to judge whether or not authorization has been granted, and each customer's terminal includes:
a means to receive a request for cash payment, and
a means to display said request for cash payment.

13. An electronic commerce system as claimed in claim 11 or claim 12, wherein:
each account settlement organization terminal includes:
a means to receive said order information,
a means to store a customer' s payment information received,
a means to judge if there is agreement between order information and payment information, and a means to transmit to the sales information coordinating organization agreement information on agreement between order information and payment information determined by said agreement judging means; and
the sales information coordinating organization includes:
a means to receive agreement information from an account settlement organization terminal,
a means to store agreement information between order information and payment information transmitted from an account settlement organization terminal,
a means to process said agreement information to judge whether there is agreement between order information and payment information, and
a means to transmit either order information or both order information and customer information to a seller's terminal in case said judging means
ascertains the presence of agreement.

14. An electronic commerce system as claimed in any one of the claims from claim 1 to claim 13, wherein:
each customer's terminal includes:
a means to receive confirmation information from the sales information coordinating organization, and
a means to display said confirmation information; and
the sales information coordinating organization includes:
a means to create confirmation information by processing customer information and order information from a customer's terminal, and
a means to transmit said confirmation information to the customer's terminal.

15. An electronic commerce system as claimed in any one of the claims from claim 1 to claim 14, wherein:
each customer's terminal includes:
a means to receive request information from the sales information coordinating organization,
a means to store said request information, and
a means to display said request information ; and
the sales information coordinating organization includes:
a means to transmit request information to a customer's terminal.

16. An electronic commerce system as claimed in any one of the claims from claim 11 to claim 13, wherein:
each customer's terminal includes:
a means to receive request information from an account settlement organization terminal, and
a means to display said request information; and each account settlement organization terminal includes:
a means to transmit request information to a customer's terminal.

17. An electronic commerce system as claimed in claim 11, wherein:
each customer's terminal includes:
a means to receive confirmation information from the sales information coordinating organization, and
a means to display confirmation information from the sales information coordinating organization;
each account settlement organization terminal includes:
a means to store a customer's payment information, and
a means to transmit said payment information to the sales information coordinating organization; and
the sales information coordinating organization includes:
a means to store payment information from an account settlement organization terminal,
a means to judge whether there is agreement between order information and payment information,
a means to transmit confirmation information to a customer's terminal,
a means to instruct the transmitting means to transmit to a seller's terminal either order information or both customer information and order information in case consistency agreement between the order information and the payment information has been ascertained, and
a means to instruct the transmitting means to transmit confirmation information to a customer's terminal in case the absence of agreement has been ascertained.

18. An electronic commerce system as claimed in any one of the claims from claim 9 to claim 13 or claim 17, wherein the sales information coordinating organization includes:
a means to attach an ID number and a transaction code to a customer,
a means to include said ID number and transaction code in the customer information,
a means to select from customer information either an ID number alone or both an ID number and a transaction code, and
a means to transmit to a seller's terminal the selected information, i.e. either the ID number alone or both the ID number and the transaction code, as customer information.

19. An electronic commerce system as claimed in any one of the claims from claim 9 to claim 13 or claim 17, wherein the sales information coordinating organization includes:
a means to attach an order code to each transaction, and
a means to include said order code in the order information.

20. An electronic commerce system as claimed in any one of the claims from claim 9 to claim 13 or claim 17, wherein the sales information coordinating organization includes:
a means to attach an order code to each transaction,
a means to attach a transaction code to a customer,
a means to include said order code and transaction code in the order information
a means to select from order information, in addition to information on an item or items and its or their price(s), either an order code or both an order code and a transaction code, and
a means to transmit to a seller's terminal order information consisting of the information on the item(s) and the price(s) and either the order code or both the order code and the transaction code.

21. An electronic commerce system as claimed in claim 19 or claim 20, wherein:
each customer's terminal includes:
a means to input a request for confidentiality of customer information, and
a means to transmit said confidentiality request to the sales information coordinating organization; and
the sales information coordinating organization includes:
a means to receive said confidentiality request from a customer's terminal,
a means to judge whether there is a confidentiality request and give an instruction to create either an order code or both an order code and a transaction code, and
a means to create either an order code or both an order code and a transaction code according to said instruction.

22. An electronic commerce system as claimed in any one of the claims from claim 1 to claim 5, wherein:
each customer's terminal includes:
a means to request service information to the sales information coordinating organization,
a means to receive service information transmitted from the sales information coordinating organization,
a means to display said service information transmitted from the sales information coordinating organization,
a means to input a request for service,
a means to transmit said request for service to the sales information coordinating organization
a means to receive confirmation/response information transmitted from the sales information coordinating organization, and
a means to display said confirmation/response information; and
the sales information coordinating organization includes:
a means to transmit service information to a customer's terminal,
a means to receive a request for service from a customer's terminal, and
a means to transmit confirmation/response information to the customer's terminal.

23. An electronic commerce system as claimed in any one of the claims from claim 6 to claim 18, wherein:
each customer's terminal includes:
a means to request the sales information coordinating organization for service information,
a means to receive service information transmitted from the sales information coordinating organization,
a means to display said service information transmitted from the sales information coordinating organization,
a means to input a request for service,
a means to transmit said request for service to the sales information coordinating organization
a means to receive confirmation/response information transmitted from the sales information coordinating organization, and
a means to display said confirmation/response information;
the sales information coordinating organization includes:
a means to transmit service information to a customer's terminal,
a means to receive a request for service from a customer's terminal,
a means to transmit said request for service to a seller's terminal,
a means to receive from the seller's terminal response information in response to said request for service, and
a means to transmit said response information to the customer's terminal; and
each seller's terminal includes:
a means to receive a request for service from the sales information coordinating organization,
a means to display said request for service,
a means to input response information in response to said request for service, and
a means to transmit response information to the sales information coordinating organization.

24. An electronic commerce system as claimed in any one of the claims from claim 1 to claim 23, wherein:
service organization terminals are connected to the sales information coordinating organization through the network;
the sales information coordinating organization includes a means to transmit customer information to a service organization terminal; and
each service organization terminal includes:
a means to receive customer information from the sales information coordinating organization, and
a means to display the customer information.

25. An electronic commerce system as claimed in claim 22 or claim 24, wherein:
service organization terminals are connected to the sales information coordinating organization and sellers' terminals through the network;
the sales information coordinating organization includes a means to transmit a request for service and customer information to a service organization terminal; and
each service organization terminal includes:
a means to receive a request for service and customer information from the sales information coordinating organization,
a means to display said request for service and customer information,
a means to input response information in response to said request for service, and
a means to transmit response information to the sales information coordinating organization.

26. An electronic commerce system as claimed in claim 24 or claim 25, wherein the service organization terminals are transport organization terminals.

27. An electronic commerce system as claimed in claim 8 or claim 9 and including transport organization terminals connected to the system through the network, wherein:
each transport organization terminal includes a means to transmit notification of completion of shipment to the sales information coordinating organization;
the sales information coordinating organization includes:
a means to receive notification of completion of shipment from a transport organization terminal,
a means to extract the customer information and the provided information concerning the transaction that corresponds to said notification of completion of shipment so as to create payment information concerning said transaction, and
a means to transmit customer information, provided information and payment information to an account settlement organization terminal; and
each account settlement organization terminal includes a means to receive customer information, provided information and payment information from the sales information coordinating organization.

28. An electronic commerce system as claimed in claim 24 or claim 25, wherein the service organization terminals are insurance organization terminals.

29. An electronic commerce system as claimed in claim 24 or claim 25, wherein the service organization terminals are transaction item storage facility terminals.

30. An electronic commerce system as claimed in claim 25, wherein:
each service organization terminal includes:
a means to transmit to a seller's terminal or another service organization terminal inquiry information concerning a request for service, and
a means to receive from a seller's terminal or another service organization terminal inquiry information concerning a request for service; and
each seller's terminal includes:
a means to receive from a service organization terminal inquiry information concerning a request for service, and a means to transmit inquiry information to a service organization terminal.

31. An electronic commerce system as claimed in any one of the claims from claim 1 to claim 30, wherein:
each customer's terminal includes:
a means to input a request for removal of customer information, and
a means to transmit said removal request to the sales information coordinating organization; and
the sales information coordinating organization includes:
a means to receive such a removal request from a customer's terminal,
a means to judge whether there has been such a removal request and instruct a removal means to perform removal, and
a means to remove customer information, which is adapted to perform removal of customer information in accordance with instruction from the means to instruct removal.

32. An electronic commerce system as claimed in claim 18, wherein:
each customer's terminal includes:
a means to input a confidentiality request for customer information, and
a means to transmit said confidentiality request to the sales information coordinating organization; and
the sales information coordinating organization includes:
a means to receive such a confidentiality request from a customer's terminal,
a means to judge whether there has been such a confidentiality request and give an instruction to create an ID number and a transaction code, and
a means to create an ID number and a transaction code, which is adapted to create an ID number and a transaction code in accordance with said instruction.

33. A method of electronic commerce transaction using an electronic commerce system that includes customers' terminals and a sales information coordinating organization connected together through a network, wherein said electronic method transaction method comprises:
a step which calls for inputting provided information for specifying items and their prices to be provided by seller into the sales information coordinating organization;
a step in which the sales information coordinating organization manages said provided information;
a step in which a customer's terminal requests the sales information coordinating organization for said provided information;
a step in which the sales information coordinating organization transmits the provided information to the customer's terminal in compliance with the request from the customer's terminal;
a step in which the customer's terminal receives the provided information;
a step in which the customer's terminal displays the provided information;
a step in which the customer's terminal transmits to the sales information coordinating organization information concerning a desired item or items selected from the provided information displayed;
a step in which the sales information coordinating organization receives order information, i.e. the provided information that has been selected;
a step in which the sales information coordinating organization manages said order information;
a step in which the sales information coordinating organization transmits a sales information coordinating organization top page;
a step in which the customer's terminal receives and displays the sales information coordinating organization top page;
a step in which the customer's terminal requests continuation of the transaction;
a step in which the sales information coordinating organization receives said request;
a step in which the sales information coordinating organization processes the order information to create an account settlement page;
a step in which the sales information coordinating organization transmits the sales information coordinating organization account settlement page to the customer's terminal;
a step in which the customer's terminal receives said sales information coordinating organization account settlement page;
a step in which the customer's terminal enters customer information into said sales information coordinating organization account settlement page;
a step in which the customer's terminal transmits to the sales information coordinating organization the sales information coordinating organization account settlement page into which the customer information has been entered;
a step in which the sales information coordinating organization receives the sales information coordinating organization account settlement page into which the customer information has been entered;
a step in which the sales information coordinating organization stores the customer information displayed on the sales information coordinating organization account settlement page; and
a step in which the sales information coordinating organization removes the stored customer information.

34. A method of electronic transaction using an electronic commerce system that includes customers' terminals, sellers' terminals and a sales information coordinating organization connected together through a network, wherein said electronic transaction method comprises:
a step in which a customer's terminal requests a seller for provided information for specifying items and their prices to be provided by the seller;
a step in which the seller transmits said provided information to the customer's terminal in compliance with the request from the customer's terminal;
a step in which the customer's terminal receives the provided information;
a step in which the customer's terminal displays the provided information;
a step in which the customer' s terminal transmits to the sales information coordinating organization information concerning a desired item or items selected from the provided information displayed;
a step in which the sales information coordinating organization receives order information, i.e. the provided information that has been selected;
a step in which the sales information coordinating organization manages said order information;
a step in which the sales information coordinating organization transmits a sales information coordinating organization top page;
a step in which the customer's terminal receives and displays the sales information coordinating organization top page;
a step in which the customer's terminal requests continuation of the transaction;
a step in which the sales information coordinating organization receives said request;
a step in which the sales information coordinating organization processes the order information to create an account settlement page;
a step in which the sales information coordinating organization transmits the sales information coordinating organization the account settlement page to the customer's terminal;
a step in which the customer's terminal receives and displays said sales information coordinating organization account settlement page;
a step in which the customer's terminal enters customer information into said sales information coordinating organization account settlement page;
a step in which the customer's terminal transmits to the sales information coordinating organization the sales information coordinating organization account settlement page into which the customer information has been entered;
a step in which the sales information coordinating organization receives the sales information coordinating organization account settlement page into which the customer information has been entered;
a step in which the sales information coordinating organization stores the customer information displayed on the sales information coordinating organization account settlement page;
a step in which the sales information coordinating organization transmits the order information or both the order information and the customer information to the seller's terminal;
a step in which the seller's terminal receives and displays the order information or both the order information and the customer information; and
a step in which the sales information coordinating organization removes the customer information.

35. A method of electronic transaction as claimed in claim 34 and using an electronic commerce system that includes account settlement organization terminals in addition to customers' terminals, sellers' terminals and a sales information coordinating organization, all of which are connected to the system through a network, wherein said electronic transaction method includes:
a step in which a seller's terminal transmits notification of completion of shipment after receiving and displaying order information or both order information and customer information;
a step in which the sales information coordinating organization receives said notification of completion of shipment;
a step in which the sales information coordinating organization extracts the customer information and the provided information on the transaction that corresponds to said notification of completion information of shipment so as to create payment instruction information;
a step in which the sales information coordinating organization transmits the customer information, the provided information and the payment instruction information to an account settlement organization terminal; and
a step in which the account settlement organization terminal receives the customer information, the provided information and the payment instruction information
from the sales information coordinating organization.

36. A method of electronic transaction using an electronic commerce system that includes customers' terminals, sellers' terminals, account settlement organization terminals and a sales information coordinating organization connected together through a network, wherein said electronic transaction method comprises:
a step in which a customer's terminal requests a seller for provided information for specifying items and their prices to be provided by the seller;
a step in which the seller transmits said provided information to the customer's terminal in compliance with the request from the customer's terminal;
a step in which the customer's terminal receives the provided information;
a step in which the customer's terminal displays the provided information;
a step in which the customer's terminal transmits to the sales information coordinating organization information concerning a desired item or items selected from the provided information displayed;
a step in which the sales information coordinating organization receives order information, i.e. the provided information that has been selected;
a step in which the sales information coordinating organization manages said order information to the customer's terminal;
a step in which the sales information coordinating organization transmits a sales information coordinating organization top page;
a step in which the customer's terminal receives and displays the sales information coordinating organization top page;
a step in which the customer's terminal requests continuation of the transaction;
a step in which the sales information coordinating organization receives said request;
a step in which the sales information coordinating organization processes the order information to create an account settlement page;
a step in which the sales information coordinating organization transmits the sales information coordinating organization account settlement page to the customer's terminal;
a step in which the customer's terminal receives and displays said sales information coordinating organization account settlement page;
a step in which the customer's terminal enters customer information into said sales information coordinating organization account settlement page;
a step in which the customer's terminal transmits to the sales information coordinating organization the sales information coordinating organization account settlement page into which the customer information has been entered;
a step in which the sales information coordinating organization receives the sales information coordinating organization account settlement page into which the customer information has been entered;
a step in which the sales information coordinating organization transmits the account settlement page to an account settlement organization terminal;
a step in which the account settlement organization terminal receives the account settlement page;
a step in which the sales information coordinating organization stores the customer information displayed on the sales information coordinating organization account settlement page;
a step in which the account settlement organization terminal stores the customer information and the order information displayed on the sales information coordinating organization account settlement page;
a step in which the account settlement organization terminal inputs payment information;
a step in which the account settlement organization terminal judges if there is agreement between the order information and the payment information;
a step in which the account settlement organization terminal transmits to the sales information coordinating organization the result of said judgement, i.e. the information indicating
the presence or absence of agreement;
a step in which the sales information coordinating organization receives the result of said judgement, which is the information indicating the presence or absence of agreement;
a step in which the sales information coordinating organization transmits the order information or both the order information and the customer information to the seller's terminal only when the sales information coordinating organization has received information indicating the presence of agreement;
a step in which the seller's terminal receives and displays the order information or both the order information and the customer information; and
a step in which the sales information coordinating organization removes the customer information.

37. A method of electronic transaction as claimed in any one of the claims from claim 33 to claim 36, wherein the electronic transaction method includes:
a step in which the sales information coordinating organization transmits to a customer's terminal confirmation information intended to confirm customer information, order information or payment information; and
a step in which the customer's terminal receives said confirmation information.

38. A method of electronic transaction using an electronic commerce system that includes customers' terminals, sellers' terminals, account settlement organization terminals and a sales information coordinating organization connected together through a network, said electronic transaction method comprising:
a step in which a customer's terminal requests a seller for provided information for specifying items and their prices to be provided by the seller;
a step in which the seller transmits said provided information to the customer's terminal in compliance with the request from the customer's terminal;
a step in which the customer's terminal receives the provided information;
a step in which the customer's terminal displays the provided information;
a step in which the customer's terminal transmits to the sales information coordinating organization information concerning a desired item or items selected from the provided information displayed;
a step in which the sales information coordinating organization receives order information, i.e. the provided information that has been selected;
a step in which the sales information coordinating organization manages said order information;
a step in which the sales information coordinating organization transmits a sales information coordinating organization top page to a customer's terminal ;
a step in which the customer's terminal receives and displays the sales information coordinating organization top page;
a step in which the customer's terminal requests continuation of the transaction;
a step in which the sales information coordinating organization receives said request;
a step in which the sales information coordinating organization processes the order information to create an account settlement page;
a step in which the sales information coordinating organization transmits the sales information coordinating organization account settlement page to the customer's terminal;
a step in which the customer's terminal receives and displays said sales information coordinating organization account settlement page;
a step in which the customer's terminal enters customer information into said sales information coordinating organization account settlement page;
a step in which the customer's terminal transmits to the sales information coordinating organization the sales information coordinating organization account settlement page into which the customer information has been entered;
a step in which the sales information coordinating organization receives the sales information coordinating organization account settlement page into which the customer information has been entered;
a step in which the sales information coordinating organization transmits the account settlement page to an account settlement organization;
a step in which the account settlement organization terminal receives the account settlement page;
a step in which the sales information coordinating organization stores the customer information displayed on the sales information coordinating organization account settlement page;
a step in which the account settlement organization terminal stores the customer information displayed on the sales information coordinating organization account settlement page;
a step in which the account settlement organization terminal enters payment information;
a step in which the account settlement organization terminal transmits the payment information to the sales information coordinating organization;
a step in which the sales information coordinating organization judges if there is agreement between the order information and the payment information;
a step in which the sales information coordinating organization transmits the order information or both the order information and the customer information to the seller's terminal when the sales information coordinating organization has ascertained the presence of agreement ;
a step in which the seller's terminal receives the order information or both the order information and the customer information;
a step in which the sales information coordinating organization transmits to the customer's terminal confirmation information indicating insufficient payment when the sales information coordinating organization has ascertained the absence of agreement;
a step in which the customer's terminal receives and displays said confirmation information; and
a step in which the sales information coordinating organization removes the customer information.

39. A method of electronic transaction as claimed in claim 33 or claim 34 and using an electronic commerce system that includes account settlement organization terminals and transport organization terminals connected together through a network, wherein said electronic transaction method includes:
a step in which shipment instruction information including customer information is transmitted to a transport organization terminal from either a seller terminal or the sales information coordinating organization after the seller's terminal receives order information or both the order information and the customer information, or after the sales information coordinating organization stores the customer information displayed ion the sales information coordinating organization account settlement page;
a step in which the transport organization terminal transmits notification of completion of shipment to the sales information coordinating organization;
a step in which the sales information coordinating organization receives said notification of completion of shipment;
a step in which the sales information coordinating organization extracts the customer information and the provided information on the transaction that corresponds to said notification of completion information of shipment so as to create payment instruction information;
a step in which the sales information coordinating organization transmits the customer information, the provided information and the payment instruction information to an account settlement organization terminal; and
a step in which the account settlement organization terminal receives the customer information, the provided information and the payment instruction information from the sales information coordinating organization.

40. A method of electronic transaction as claimed in any one of the claims from 34 to claim 38, wherein said electronic transaction method includes:
a step in which the sales information coordinating organization creates an ID number and a transaction code;
a step in which the sales information coordinating organization includes an ID number and a transaction code in customer information;
a step in which the sales information coordinating organization selects from customer information either an ID number alone or both an ID number and a transaction code;
a step in which the sales information coordinating organization transmits to a seller's terminal the selected information, i.e. either the ID number alone or both the ID number and the transaction code, as customer information;
a step in which the sales information coordinating organization transmits either the ID number alone or both the ID number and the transaction code to the customer's terminal; and
a step in which the customer' s terminal receives said ID number alone or both the ID number and the transaction code.

41. A method of electronic transaction as claimed in any one of the claims from 34 to claim 38, said electronic transaction method including:
a step in which the sales information coordinating organization creates an order code and a transaction code;
a step in which the sales information coordinating organization includes an order code and a transaction code in order information;
a step in which the sales information coordinating organization selects from order information, either an order code or both an order code and a transaction code in addition to information on an item or items and its or their price(s)
a step in which the sales information coordinating organization transmits to a seller's terminal order information consisting of the information on the item(s) and the price(s) and either only the order code alone or both the order code and the transaction code that have been selected;
a step in which the sales information coordinating organization transmits either the order code alone or both the order code and the transaction code to the customer's terminal; and
a step in which the customer's terminal receives the order code alone or both the order code and the transaction code.

42. A method of electronic transaction as claimed in any one of the claims from claim 33 to claim 38 and using an electronic commerce system that includes service organization terminals connected together through a network, wherein said electronic transaction method includes:
a step in which the sales information coordinating organization creates an ID number;
a step in which the sales information coordinating organization includes an ID number in customer information;
a step in which the sales information coordinating organization selects solely an ID number from customer information;
a step in which the sales information coordinating organization transmits to a seller's terminal the selected ID number alone as customer information;
a step in which the sales information coordinating organization transmits to an account settlement organization terminal and a service terminal the customer information that has not undergone the aforementioned selection; and
a step in which the account settlement organization terminal and the service terminal receive the customer information that has not undergone the aforementioned selection.

43. A method of electronic transaction as claimed in any one of the claims from claim 33 to claim 38 and using an electronic commerce system that includes service organization terminals connected to the system through a network, wherein said electronic transaction method includes:
a step in which the sales information coordinating organization creates an order code;
a step in which the sales information coordinating organization includes an order code in order information;
a step in which the sales information coordinating organization selects,exclusively an order code and information on an item or items and its or their price(s) from order information;
a step in which the sales information coordinating organization transmits to a seller's terminal order information exclusively consisting of said order code and the information on the item(s) and the price(s);
a step in which the sales information coordinating organization transmits to an account settlement organization terminal and a service terminal the order information that has not undergone the aforementioned selection; and
a step in which the account settlement organization terminal and the service terminal receive the order information that has not undergone the selection.

44. A method of electronic transaction as claimed in any one of the claims from claim 33 to claim 38 and using an electronic commerce system that includes service organization terminals connected to the system through a network, wherein said electronic transaction method includes:
a step in which the sales information coordinating organization creates an ID number and a transaction code;
a step in which the sales information coordinating organization includes an ID number and a transaction code in customer information;
a step in which the sales information coordinating organization selects from customer information either an ID number alone or both an ID number and a transaction code;
a step in which the sales information coordinating organization transmits exclusively the selected ID number alone as customer information to a seller's terminal ;
a step in which the sales information coordinating organization transmits to a service terminal exclusively the ID number and the transaction code that have been selected; and
a step in which the service terminal receives exclusively the ID number and the transaction code that have been selected.

45. A method of electronic transaction as claimed in any one of the claims from claim 33 to claim 38 and using an electronic commerce system that includes service organization terminals connected to the system through a network, wherein said electronic transaction method includes:
a step in which the sales information coordinating organization creates an order code and a transaction code;
a step in which the sales information coordinating organization includes an order code and a transaction code in order information;
a step in which the sales information coordinating organization selects from order information, in addition to information on an item or items and its or their price(s), either an order code or both an order code and a transaction code;
a step in which the sales information coordinating organization transmits to a seller's terminal order information not exclusively consisting of the information on the item(s) and the price (s) and either the order code alone or both the order code and the transaction code that have been selected;
a step in which the sales information coordinating organization transmits to a service terminal exclusively the order code and the transaction code that have been selected; and
a step in which the service terminal receives exclusively the order code and the transaction code that have been selected.

46. A method of electronic transaction as claimed in claim 40, claim 32 or claim 38, wherein said electronic transaction method includes:
a step in which a customer's terminal requests confidentiality of customer information:
a step in which the sales information coordinating organization ascertains if such a confidentiality request has been made; and
a step in which the sales information coordinating organization creates solely an ID number or both an ID number and a transaction code in case the sales information coordinating organization judges that a confidentiality request has been made.

47. A method of electronic transaction as claimed in claim 41, claim 43 or claim 45, wherein said electronic transaction method includes:
a step in which a customer's terminal requests confidentiality of customer information;
a step in which the sales information coordinating organization ascertains if such a confidentiality request has been made; and
a step in which the sales information coordinating organization creates solely an order code or both an order code and a transaction code in case the sales information coordinating organization ascertains that a confidentiality request has been made.

48. A method of electronic transaction as claimed in any one of the claims from claim 33 to claim 47. wherein said electronic transaction method includes:
a step in which a customer's terminal requests removal of customer information;
a step in which the sales information coordinating organization ascertains whether such a removal request has been made;
a step in which the sales information coordinating organization gives an instruction for removal of the customer information in case the sales information coordinating organization judgeascertains that a removal request has been made; and
a step in which the customer information is removed in accordance with said instruction.

49. A method of electronic transaction as claimed in any one of the claims from claim 33 to claim 48 and using an electronic commerce system that includes a sales information coordinating organization, customers' terminals, seller's terminals, account settlement organization terminals and service organizations connected to gether through a network, wherein said electronic transaction method includes:
a step in which a customer's terminal requests the sales information coordinating organization for service information;
a step in which the sales information coordinating organization receives said requests;
a step in which the sales information coordinating organization transmits service information to the customer's terminal in response to said request;
a step in which the customer's terminal receives the service information transmitted from the sales information coordinating organization;
a step in which the customer's terminal displays said service information transmitted from the sales information coordinating organization;
a step in which the customer's terminal enters a request for service;
a step in which the customer's terminal transmits the request for service to the sales information coordinating organization;
a step in which the sales information coordinating organization receives the request for service from the customer's terminal;
a step in which the sales information coordinating organization transmits said request for service to a seller's terminal and/or a service organization;
a step in which the seller's terminal and/or the service organization receive(s) and display(s) the request for service;
a step in which the seller's terminal and/or the service organization enter(s) response information in response to the request for service;
a step in which the seller's terminal and/or the service organization transmit(s) the response information to the sales information coordinating organization;
a step in which the sales information coordinating organization receives the response information;
a step in which the sales information coordinating organization transmits said response information to the customer's terminal; and
a step in which the customer's terminal receives and displays said response information.

50. A sales information coordinating organization which is a system for intermediating between customers and sellers and includes:
a means to receive customer information and order information from a customer's terminal and provided information from a seller' s terminal;
a means to store customer information and order information from a customer's terminal and provided information from a seller's terminal;
a means to select and extract a desired information item from the stored customer information or order information;
a means to transmit the customer information and the order information that has been selected and extracted to a seller's terminal; and
a means to remove customer information.
